# EUROPÄISCHE PATENTSCHRIFT

(11) **EP 2 285 940 B1**
(45) Veröffentlichungstag und Bekanntmachung des Hinweises auf die Patenterteilung: **13.03.2013**
(21) Anmeldenummer: 08749268.2
(22) Anmeldetag: 30.04.2008
(51) Int. Cl.: B01D 15/00, B01J 20/10, B01J 39/14, C10L 1/02, C11C 1/08

(54) **VERFAHREN ZUR ENTFERNUNG VON STERYLGLYCOSIDEN AUS BIODIESEL**
PROCESS FOR REMOVING STERYL GLYCOSIDES FROM BIODIESEL
PROCÉDÉ D'ÉLIMINATION DE STÉRYLGLYCOSIDES DE BIODIESEL

(43) Veröffentlichungstag der Anmeldung: 23.02.2011
(73) Patentinhaber: Süd-Chemie IP GmbH & Co. KG, 80333 München (DE)
(72) Erfinder: SOHLING, Ulrich, 85356 Freising (DE); RUF, Friedrich, 84184 Ast (DE); ORTIZ NIEMBRO, Jose Antonio, Pue. (MX); CONDEMARIN VARGAS, Rosalina, Lima 27 (PE); BELLO, Jorge, Pue. (MX)
(74) Vertreter: Stolmár & Partner
(86) Internationale Anmeldenummer: PCT/EP2008/003521
(87) Internationale Veröffentlichungsnummer: WO 2009/132670

(56) Entgegenhaltungen:
- WO-A-2005/037969
- WO-A-2007/076163
- WO-A-2008/055676
- DE-A1-102005 012 638
- DE-A1-102005 062 955
- INMOK LEE ET AL: "The Role of Sterol Glucosides on Filter Plugging" INTERNET CITATION, [Online] April 2007 (2007-04), Seiten 1-3, XP002486364 Gefunden im Internet: URL:http://www.biodieselmagazine.com/artic le-print.jsp?article_id=1566> [gefunden am 2009-02-19]

## Beschreibung

Die Erfindung betrifft ein Verfahren zur Reinigung von Biodiesel, Biodiesel-Vorstufen, pflanzlichen oder tierischen Fetten, und deren Gemischen.

Aufgrund der begrenzten Vorkommen an fossilen Rohstoffen und den immer weiter steigenden Energiepreisen finden Treibstoffe auf der Basis nachwachsender Rohstoffe immer größeres Interesse. Insbesondere wird Biodiesel in Europa derzeit bereits zu den auf dem Markt erhältlichen Dieseltreibstoffen zugesetzt. Zudem können auch pflanzliche oder tierische Fette als Treibstoffe verwendet werden oder dienen als Ausgangsmaterial für die Herstellung von Biodiesel.

Biodiesel wird durch Alkoholyse von Triglyceriden hergestellt, wobei ein Mol Triglycerid mit drei Mol Alkohol zu einem Mol Glycerin und drei Mol des entsprechenden Fettsäureesters reagiert. Die Umsetzung umfasst drei reversibel verlaufende Reaktionen, wobei das Triglycerid schrittweise in ein Diglycerid, ein Monoglycerid und schließlich in Glycerin überführt wird. Bei jedem der Schritte wird jeweils ein Mol Alkohol verbraucht und ein Mol eines Fettsäureesters freigesetzt. Bei den meisten industriellen Verfahren wird Methanol als Alkohol eingesetzt. Es wird jedoch auch Biodiesel kommerziell angeboten, welches Ethyl- oder Propylfettsäureester enthält.

Die Umesterung kann als einstufiges Verfahren durchgeführt werden. Es ist jedoch auch möglich, die Umesterung in mehreren Stufen durchzuführen. Dabei wird in jedem Schritt lediglich ein Teil des benötigten Methanols zugesetzt und die Glycerinphase nach jedem Schritt abgetrennt. Zudem kann die Alkoholyse sowohl unter saurer als auch unter basischer Katalyse durchgeführt werden.

In den meisten industriellen Verfahren wird die Alkoholyse der Triglyceride unter homogener alkalischer Katalyse durchgeführt. Das als Katalysator wirkende Alkoxidion wird erzeugt, indem beispielsweise ein Alkalialkoholat im Alkohol gelöst wird oder das reine Alkalimetall mit dem Alkohol umgesetzt wird. Bei der Methanolyse kann auch ein entsprechendes Alkalihydroxid im Methanol gelöst werden. Da bei der Alkoholyse von Triglyceriden relativ rasch eine Phasentrennung durch das entstehende Glycerin eintritt, wird der überwiegende Anteil des alkalischen Katalysators relativ rasch aus der Reaktionsmischung entfernt. Die entstehenden Fettsäureester gelangen daher mit dem Katalysator kaum in Berührung, so dass die Gefahr einer Verseifung gering ist. Bezogen auf das eingesetzte Öl wird der Katalysator meist in einer Menge von 0,5 bis 1 Gew.-% verwendet. Zu Details der Biodieselherstellung wird auf die Monographie von M. Mittelbach, C. Remschmidt, "Biodiesel; The comprehensive Handbook", Graz, 2004; ISBN 3-200-00249-2 verwiesen.

Die als Ausgangsmaterialien zur Biodieselherstellung verwendeten Triglyceride lassen sich beispielsweise aus Pflanzen- oder Tierfett gewinnen. Bei den pflanzlichen Rohstoffen werden bei der weltweiten Produktion von Biodiesel vor allem vier Ausgangsmaterialien verwendet, nämlich Rapsöl, Sonnenblumenöl, Sojabohnenöl und Palmöl. Weitere Ausgangsmaterialien, die eine kommerzielle Bedeutung haben, sind tierische Fette, wie Rindertalg, sowie gebrauchte Frittierfette.

Um bei der Biodiesel-Herstellung anfallende Seifen sowie restliches Methanol, Glycerin, Mono- und Diglyceride aus dem Biodiesel zu entfernen, wird nach der Umesterung meist eine Wasserwäsche durchgeführt. Enthält das rohe Biodiesel große Mengen an Seifen, kann sich dabei eine stabile Emulsion ausbilden, was die Abtrennung der Fettsäureester deutlich erschwert.

An die Produkteigenschaften von Treibstoffen auf Basis nachwachsender Rohstoffe werden derzeit ständig steigende Ansprüche sowohl von Seiten der Verbraucher, als auch von Seiten der Behörden gestellt. Um ein definiertes Verbrennen des Biodiesels sicherzustellen wurden beispielsweise in Deutschland Grenzwerte für Nebenkomponenten im Biodiesel festgelegt. Gemäß der DIN-Norm DIN EN 14214 ist für Monoglyceride ein Maximalgehalt von 0,8 Gew.-%, für freies Glycerin ein maximaler Gehalt von 0,2 Gew.-%, für Diglyceride ein maximaler Gehalt von 0,2 Gew.-%, und ebenso für Triglyceride ein maximaler Gehalt von 0,2 Gew.-% festlegt.

Da Biodiesel aus natürlichen Rohstoffen hergestellt wird, schwanken die Konzentrationen von Verunreinigungen sowie deren Zusammensetzung innerhalb weiter Grenzen. Dies kann bei der Herstellung des Biodiesels zu Schwierigkeiten führen. Wird das Biodiesel nach der Herstellung auf Raumtemperatur abgekühlt oder auch bei Lagerung über einen längeren Zeitraum hinweg fallen beispielsweise oft noch geringe Mengen eines feinen
Niederschlags aus, der dann beispielsweise zum Verstopfen von Filtern führen kann. Als eine Substanzklasse, die zur Bildung von Niederschlägen im Biodiesel führt, das durch Umesterung aus Pflanzenölen hergestellt wurde, sind Glycoside und hier insbesondere Sterylglycoside identifiziert worden. Sterine sind vom Cholesterin abgeleitete Steroide, die nur am C-3 eine Hydroxygruppe, sonst aber keine funktionelle Gruppe tragen. Meist weisen sie eine Doppelbindung in 5/6-Stellung, seltener auch in 7/8 oder 8/9 Stellung auf. Sie stellen formal Alkohole dar und werden daher auch häufig als Sterole bezeichnet. Natürlich vorkommende Sterylglycoside umfassen neben dem glycosidisch gebundenen Sterin oft noch eine Fettsäure, mit welcher die primäre Hydroxygruppe des Zuckers acyliert ist. Sie sind dadurch sehr gut in pflanzlichen oder tierischen Fetten löslich. Man nimmt an, dass während der Alkoholyse der Triglyceride auch die Acylgruppe an der primären Hydroxygruppe der Sterylglycoside gespalten wird, wobei ein nicht acyliertes Sterylglycosid erhalten wird. Diese nicht acylierten Sterylglycoside sind in Biodiesel nahezu unlöslich. Sie liegen daher als sehr feine Schwebteilchen vor, die beispielsweise als Keime für die Kristallisation anderer Verbindungen wirken können. Schwierigkeiten, die beispielsweise durch im Biodiesel noch vorhandene Monoglyceride verursacht werden, können sich daher noch verstärken. Nicht acylierte Sterylglycoside können bereits in sehr geringen Konzentrationen die Ausfällung fester Aggregate aus Biodiesel bewirken. Schon Konzentrationen im zweistelligen ppm Bereich können bei Raumtemperatur zur Ausbildung von Trübungen im Biodiesel führen. Nicht acylierte Sterylglycoside weisen einen sehr hohen Schmelzpunkt von etwa 240 °C auf. Trübungen oder Niederschläge, die durch nicht acylierte Sterylglycoside verursacht werden, lassen sich daher nicht einfach durch Erwärmen des Biodiesels auf eine höhere Temperatur auflösen. Sind also auf einem Filter bereits Ablagerungen vorhanden, verstopft dieses in Gegenwart von nicht acylierten Sterylglycosiden im Biodiesel relativ rasch vollständig.

Nach dem Produktionsprozess wird das Biodiesel einer abschlie-βenden Prüfung unterzogen. Wird dabei festgestellt, dass der Test zur Blockierung von Filtern nicht bestanden wird, weil das an sich fertige Biodiesel noch sehr geringe Mengen an nicht acyliertem Sterylglycosid enthält, kann dieses Biodiesel nicht freigegeben werden.

Ein aus dem Stand der Technik bekanntes Verfahren zur Abtrennung von Inhaltsstoffen, wie beispielsweise von Sterylglycosiden, aus Biodiesel beruht darauf, dass das rohe Biodiesel auf niedrige Temperaturen abgekühlt und anschließend filtriert wird. Dieses Verfahren ist jedoch in seiner Ausführung äußerst aufwändig.

Die WO 2007/076163 A beschreibt ein Verfahren zur Behandlung von Biodiesel mit Adsorbentien und dergleichen zur Entfernung von Sterylglycosiden.

Der Erfindung lag daher die Aufgabe zugrunde, ein Verfahren zur Reinigung von Biodiesel bereitzustellen, mit welchem auch sehr geringe Mengen an Glycosiden, insbesondere Sterylglycosiden, aus dem Biodiesel entfernt werden können. Das Verfahren sollte sehr einfach und kostengünstig durchgeführt werden können, sodass es auch noch zur Feinreinigung von Biodiesel eingesetzt werden kann, das bereits eine sehr hohe Qualität aufweist.

Diese Aufgabe wird durch ein Verfahren mit den Merkmalen des Patentanspuchs 1 gelöst. Bevorzugte Ausführungsformen des erfindungsgemäßen Verfahrens sind Gegenstand der abhängigen Unteransprüche.

Erfindungsgemäß wurde gefunden, dass durch Verwendung eines speziellen Adsorbens, welches eine spezielle Smektit-Kieselgel-Mischphase enthält, auch sehr geringe Mengen an Glycosiden, insbesondere Sterylglycosiden, aus Biodiesel entfernt werden können. Derartige Smektit-Kieselgel-Mischphasen sind aus natürlichen Quellen zugänglich und können daher einfach und kostengünstig bereitgestellt werden. Ferner wird an sich nur eine relativ geringe Menge des Adsorbens benötigt, um die noch im Biodiesel vorhandenen Glycoside, insbesondere nicht acylierte Sterylglycoside zu entfernen. Das Verfahren kann daher sehr gut eingesetzt werden, um Biodiesel nachzureinigen. Eine solche zusätzliche Reinigungsstufe kann dann eingesetzt werden, wenn nach der Herstellung des Biodiesels die Spezifikation für beispielsweise nicht acylierte Sterylglycoside nicht erfüllt werden und eine Nachreinigung erforderlich ist. Das erfindungsgemäße Verfahren kann jedoch auch routinemäßig beispielsweise als abschließende Reinigungsstufe zur weiteren Veredelung des Biodiesels eingesetzt werden.

Erfindungsgemäß wird daher ein Verfahren zur Reinigung von Biodiesel, wobei
- ein rohes Biodiesel bereitgestellt wird, welches mindestens ein Glycosid in einer Henge von weniger als 500 ppmn enthält;
- das rohe Biodiesel mit einem Adsorbens umgesetzt wird, welches zumindest eine Smektit-Kieselgel-Mischphase enthält, wobei die Smektit-Kieselgel-Mischphase zumindest die folgenden physikalischen Parameter aufweist:
   - eine spezifische Oberfläche von mehr als 120 m²/g
   - ein Gesamtporenvolumen von mehr als 0,35 ml/g;
   - einen Siliziumgehalt, berechnet als SiO₂, von zumindest 60 Gew.-%; und
   - ein gereinigtes Biodiesel von dem Adsorbens abgetrennt wird.

Beim erfindungsgemäßen Verfahren wird zunächst ein rohes Biodiesel bereitgestellt.

Unter "Biodiesel" wird ein Gemisch von Fettsäurealkylestern verstanden, wie es üblicherweise bei der Alkoholyse von natürlichen Fetten und Ölen erhalten wird. Die Alkoholyse kann sowohl unter saurer als auch unter alkalischer Katalyse durchgeführt worden sein. Als natürliche Fette und Öle können solche Öle und Fette eingesetzt werden, wie sie üblicherweise bei der Herstellung von Biodiesel verwendet werden. Wird im weiteren auf "Fette" Bezug genommen, so sollen davon auch Öle erfasst werden. Ebenso sollen auch Fette erfasst werden, wenn auf Öle Bezug genommen wird. Unter Fetten und Ölen werden allgemein Triglyceride langkettiger Fettsäuren verstanden. Die Fettsäuren umfassen vorzugsweise mehr als 10 Kohlenstoffatome und umfassen bevorzugt 15 bis 40 Kohlenstoffatome. Die Alkylkette der Fettsäuren ist bevorzugt geradkettig. Sie kann vollständig hydriert sein oder auch ein oder mehrere Doppelbindungen umfassen. Geeignete Ausgangsmaterialien sind pflanzliche Fette, wie Rapsöl, Sonnenblumenöl, Sojabohnenöl oder Palmöl. Es können aber auch andere pflanzliche Fette verwendet werden, wie Jatrophaöl oder Öle, die aus Algen gewonnen wurden. Diese Öle eignen sich nicht für den Verzehr durch den Menschen. Außerdem wird für die Produktion dieser Pflanzen keine landwirtschaftliche Fläche genutzt, die auch für die Nahrungsmittelproduktion geeignet ist. Die Jatrophanuss kann beispielsweise auch auf sehr kargen Böden angebaut werden, die für eine Getreideproduktion nicht geeignet sind. Weiter können auch tierische Fette verwendet werden, wie Rindertalg. Es ist auch möglich, gebrauchte Fette, wie Frittierfette zu verwenden. Es können sowohl Öle und Fette verwendet werden, die auf nur eine Quelle zurückgehen. Es aber auch möglich, Gemische von Fetten bzw. Ölen zu verwenden. Die Fette bzw. Öle werden vor der Alkoholyse bevorzugt in bekannter Weise gereinigt und beispielsweise entschleimt und/oder desodoriert. Nach einer bevorzugten Ausführungsform werden für die Alkoholyse Fette oder Öle mit einem Lecithingehalt von weniger als 10 Gew.-%, insbesondere weniger als 5 Gew.-%, weiter bevorzugt weniger als 10 ppm, insbesondere weniger als 5 ppm verwendet.

Diese Fette und Öle werden in üblicher Weise durch Alkoholyse in Glycerin und Fettsäureester gespalten. Die Alkoholyse erfolgt bevorzugt unter alkalischer Katalyse. Als Alkohole können bei der Herstellung von Biodiesel übliche Alkohole eingesetzt werden, wie Methanol, Ethanol oder Propanol. Die Verwendung anderer Alkohole ist ebenfalls möglich.

Im Rahmen der vorliegenden Erfindung kann der Begriff "Biodiesel" insbesondere auch jegliches Gemisch von Fettsäurealkylestern bezeichnen. Der Alkylrest des Fettsäurealkylesters kann beispielsweise geradkettig oder verzweigt sein und 1 bis 28 Kohlenstoffatome umfassen. Insbesondere kann der Fettsäurealkylester beispielsweise ein Methyl-, Ethyl-, Propyl-, Butyl-, Pentyl-, Hexyl-Ester einer Fettsäure sein. Vorzugsweise umfasst das Gemisch von Fettsäurealkylestern einen Gehalt von mindestens 70 Gew.-%, vorzugsweise von mindestens 85 Gew.-%, bevorzugt von mindestens 95 Gew.-%, insbesondere von mindestens 98 Gew.-% an Fettsäurealkylestern, jeweils bezogen auf das Gesamtgewicht der organischen Bestandteile des Gemisches.

Als Biodiesel bezeichnete Gemische können beliebige Mengen an Mono-, Di-, und/oder Tri-Glyceriden aufweisen. Vorzugsweise kann Biodiesel einen begrenzten Gehalt an Mono-, Di-, und/oder Triglyceriden aufweisen. Beispielsweise kann der Biodiesel einen Maximalgehalt von 2 Gew.-%, vorzugsweise von maximal 0,8 Gew.-% für Monoglyceride, einen maximalen Gehalt von 2 Gew.-%, vorzugsweise von maximal 0,2 Gew.-% für Diglyceride, und/oder einen maximalen Gehalt von 2 Gew.-%, vorzugsweise von maximal 0,2 Gew.-% für Triglyceride aufweisen, bestimmt gemäß der DIN-Norm DIN EN 14214.

Das bei der Alkoholyse von Fetten und Ölen erhaltene Gemisch wird in üblicher Weise aufgearbeitet. So kann beispielsweise die Glycerinphase vom rohen Biodiesel abgetrennt werden oder das rohe Biodiesel auch ein- oder mehrfach mit Wasser gewaschen werden. Es ist aber auch möglich, das bei der Alkoholyse erhaltene rohe Biodiesel zunächst mit Hilfe eines Adsorptionsmittels zu reinigen.

Unter einem "rohen Biodiesel" wird an sich jedes Biodiesel verstanden, dass einen höheren Glycosidgehalt aufweist als ein Biodiesel, das mit dem erfindungsgemäßen Verfahren gereinigt wurde. Entsprechend wird unter einem "gereinigten Biodiesel" ein Biodiesel verstanden, das einen niedrigeren Glycosidgehalt aufweist als das rohe Biodiesel.

Ein rohes Biodiesel kann also ein Biodiesel sein, wie es unmittelbar nach der Alkoholyse der Fette und/oder Öle erhalten wird, beispielsweise unmittelbar nach Abtrennung der Glycerinphase. Ein rohes Biodiesel kann aber auch ein Biodiesel sein, das nach der Alkoholyse bereits Reinigungsstufen durchlaufen hat, aber noch einen zu hohen Glycosidgehalt aufweist, insbesondere einen zu hohen Gehalt an Sterylglycosiden, sodass es eine bestimmte Spezifikation nicht erfüllt und nachgereinigt werden muss.

Das rohe Biodiesel wird dann erfindungsgemäß mit einem speziellen Adsorbens versetzt.

Als Adsorbens wird eine Smektit-Kieselgel-Mischphase verwendet, die sich durch eine sehr hohe spezifische Oberfläche von mehr als 120 m²/g, vorzugsweise mehr als 150 m²/g auszeichnet. Die Smektit-Kieselgel-Mischphase kann eine spezifische Oberfläche von bis zu 300 m²/g, bevorzugt bis zu 280 m²/g aufweisen. Ferner zeichnet sich die als Adsorbens verwendete Smektit-Kieselgel-Mischphase durch ein sehr hohes Gesamtporenvolumen von mehr als 0,35 ml/g aus. Das im erfindungsgemäßen Verfahren verwendete Adsorbens weist einen ungewöhnlich hohen Anteil einer Kieselgelphase auf. Das im erfindungsgemäßen Verfahren verwendete Adsorbens weist daher einen hohen Siliziumanteil, berechnet als SiO₂, von zumindest 60 Gew.-%, bevorzugt mehr als 63 Gew.-%, insbesondere bevorzugt mehr als 70 Gew.-% auf. Entsprechend einer Ausführungsform des Verfahrens beträgt der Siliziumanteil der Smektit-Kieselgel-Mischphase weniger als 85 Gew.-%. Gemäß einer weiteren Ausführungsform beträgt der Siliziumanteil des Adsorbens, berechnet als SiO₂, weniger als 75 Gew.-%.

Überraschend wurde gefunden, dass mit der im erfindungsgemäßen Verfahren verwendeten Smektit-Kieselgel-Mischphase auch geringe Mengen an Glycosiden, insbesondere Sterylglycosiden, aus rohem Biodiesel entfernt werden können. Die Erfinder gehen davon aus, dass beim erfindungsgemäßen Verfahren die störenden Glycoside vom Adsorbens gebunden werden, das Adsorbens also nicht lediglich als Filtermedium wirkt. Insbesondere Sterylglycoside bilden, wenn sie in sehr niedriger Konzentration im Biodiesel vorliegen, beispielsweise im zweistelligen ppm-Bereich, einen extrem feinteiligen Niederschlag, der sich nur schwer durch ein Filtermedium zurückhalten lässt. Beim erfindungsgemäßen Verfahren wird auch dann eine Entfernung insbesondere von Sterylglycosiden erreicht, wenn diese in geringen Mengen im Biodiesel enthalten sind und zur Entfernung lediglich eine geringe Menge des Adsorbens in Form eines relativ grobkörnigen Granulats verwendet wird.

Das im erfindungsgemäßen Verfahren verwendete Adsorbens weist eine spezielle Struktur auf, die sich deutlich von der Struktur von Tonen, wie Bentoniten, unterscheidet. Im Gegensatz zu diesen Tonen, die eine relativ geordnete Schichtstruktur besitzen und deshalb beispielsweise quellen können, weist die als Adsorbens verwendete Smektit-Kieselgel-Mischphase eine weitgehend amorphe Struktur auf. Die Erfinder gehen davon aus, dass die amorphe Phase im Wesentlichen durch SiO₂ gebildet wird. In dieser relativ starren Matrix aus SiO₂ sind dann winzige Partikel eines Schichtsilikats in stark delaminierter Form fixiert.

Die im erfindungsgemäßen Verfahren verwendete Smektit-Kieselgel-Mischphase stellt also eine innige Mischung eines smektitischen Tons und einer amorphen Siliziumdioxidphase dar. Sie besitzt also keine geordnete Schichtstruktur, wie sie für Tonmineralien, wie Bentonit oder Attapulgit an sich typisch ist. Makroskopisch besitzt die Smektit-Kieselgel-Mischphase eine homogene Struktur. Es lassen sich also durch beispielsweise optische mikroskopische Methoden keine Domänen erkennen, die durch ein gelartiges SiO₂ bzw. durch ein Schichtsilikat gebildet werden. Die Gegenwart einer smektitischen Phase lässt sich beispielsweise durch die Adsorption von Methylenblau nachweisen. Das Verfahren wird bei den Beispielen im Detail beschrieben. Andererseits ist die im erfindungsgemäßen Verfahren verwendete Smektit-Kieselgel-Mischphase röntgenamorph und zeigt nicht die für Schichtsilikate typischen Reflexe.

Die Erfinder gehen daher davon aus, dass die im erfindungsgemäßen Verfahren verwendete Smektit-Kieselgel-Mischphase eine kontinuierliche Phase umfasst, die aus Kieselgel gebildet ist. In diese amorphe Phase sind homogen verteilt sehr kleine Plättchen eines Schichtsilikats eingelagert.

Damit unterscheidet sich die im erfindungsgemäßen Verfahren verwendete Smektit-Kieselgel-Mischphase in ihrer Struktur wesentlich von Tonen, wie sie beispielsweise als natürliche Bleicherden für die Raffination von Ölen verwendet werden. Diese sind Schichtsilikate und umfassen keine großen Anteile einer aus SiO₂ gebildeten amorphen Phase. Die im erfindungsgemäßen Verfahren verwendeten Smektit-Kieselgel-Mischphase enthält aus einem Schichtsilikat gebildete Plättchen, welche homogen in der Struktur verteilt sind. Damit unterscheidet sich die Struktur auch deutlich von einer Struktur, wie sie beispielsweise hochaktive Bleicherden aufweisen. Diese werden durch Extraktion von Schichtsilikaten mit starken Säuren erhalten. Dabei wird die Schichtstruktur der als Ausgangsmaterial verwendeten Schichtsilikate von den Rändern her aufgelöst. Derartige hochaktive Bleicherden umfassen daher einen aus einem Schichtsilikat gebildeten Kern, welcher von einer Hülle aus amorphem Siliciumdioxid umgeben ist und weisen damit eine inhomogene Struktur auf.

Die im erfindungsgemäßen Verfahren verwendete Smektit-Kieselgel-Mischphase stellt also eine neue Klasse von Tonmineralien dar, die sich in ihrer Struktur und ihren Eigenschaften deutlich von den bisher verwendeten Tonmineralien unterschiedet. Die Materialien lassen sich aus natürlichen Quellen abbauen und können daher einfach und bei relativ niedrigen Kosten bereitgestellt werden.

Die im erfindungsgemäßen Verfahren als Adsorbens verwendete Smektit-Kieselgel-Mischphase weist eine sehr hohe spezifische Oberfläche von vorzugsweise 180 bis 300 m²/g, besonders bevorzugt 185 bis 280 m²/g, insbesondere bevorzugt 190 bis 250 m²/g auf. Die spezifische Oberfläche wird nach dem BET-Verfahren bestimmt. Das im erfindungsgemäßen Verfahren verwendete Adsorbens weist ferner ein hohes Porenvolumen von vorzugsweise mehr als 0,5, insbesondere bevorzugt mehr als 0,55 ml/g, insbesondere bevorzugt mehr als 0,60 ml/g auf. Gemäß einer Ausführungsform des Verfahrens weist das Adsorbens ein Porenvolumen von weniger als 1,2 ml/g auf. Gemäß einer weiteren Ausführungsform des Verfahrens beträgt das Porenvolumen weniger als 1,0 ml/g und gemäß einer weiteren Ausführungsform weniger als 0,9 ml/g.

Die im erfindungsgemäßen Verfahren als Adsorbens verwendete Smektit-Kieselgel-Mischphase umfasst eine aus SiO₂ bestehende amorphe Phase, welche eine relativ starre Matrix bildet. Diese Matrix weist große Poren auf, durch welche das rohe Biodiesel leicht in das Adsorbens eindringen kann. Im Inneren der Matrix sind kleine Plättchen aus Schichtsilikaten eingelagert, welche als Adsorptionsmittel wirken. Wurden bei den bisher verwendeten Tonen nur die Randbereiche der Partikel für eine Adsorption von störenden Stoffen genutzt, kann bei der im erfindungsgemäßen Verfahren verwendeten Smektit-Kieselgel-Mischphase ein wesentlich höherer Anteil des Partikelvolumens genutzt werden. Die Erfinder nehmen an, dass die als feiner Niederschlag bzw. gelöst im rohen Biodiesel vorliegenden Glycoside, insbesondere Sterylglycoside, an der Oberfläche der in der Smektit-Kieselgel-Mischphase enthaltenen stark delaminierten Struktur der Smektitphase adsorbiert werden. An sich ist bekannt, dass Tone, also Schichtsilikate, Alkohole und Polyole adsorbieren und unter Vergrößerung des Schichtabstandes in Zwischenschichten einlagern können. Da die Glycoside, insbesondere Sterylglycoside, jedoch relativ große Moleküle darstellen, ist das Eindringen dieser Glycoside in die Schichtstruktur eines Tones, wie Bentonit, erschwert. Ferner liegen insbesondere die Sterylglycoside in Form eines sehr feinen Feststoffs vor, so dass an sich nicht erwartet werden kann, dass Sterylglycoside bereits von geringen Mengen an Tonen adsorbiert werden. Bei der im erfindungsgemäßen Verfahren verwendeten Smektit-Kieselgel-Mischphase liegt die Smektitphase in stark delaminierter und damit sehr fein verteilter Form vor. Durch die stark poröse Struktur der Kieselgelphase wird das rohe Biodiesel zu der fein verteilten Smektitphase geleitet, so dass dort störende Glycoside, insbesondere Sterylglycoside, adsorbiert werden können. Die im erfindungsgemäßen Verfahren verwendete Smektit-Kieselgel-Mischphase quillt kaum, wobei dennoch durch die Feinverteilung der Smektitphase eine hohe Anzahl an Bindungsstellen für störende Glycoside zur Verfügung gestellt wird.

Die als Adsorbens verwendete Smektit-Kieselgel-Mischphase kann an sich in beliebiger Form in das zu reinigende rohe Biodiesel eingebracht werden. So ist es beispielsweise möglich, das Adsorbens in gemahlener Form in das Biodiesel einzurühren.

Wird das Adsorbens in Form eines Pulvers oder Granulats in das rohe Biodiesel eingebracht und in diesem suspendiert, so wird bei dieser Ausführungsform des erfindungsgemäßen Verfahrens das rohe Biodiesel während der Reinigung bevorzugt bewegt, beispielsweise mit Hilfe eines Rührers, so dass das Adsorbens innig mit dem Biodiesel vermischt wird, um störende Glycoside zu adsorbieren.

Die Menge des Adsorbens, welches dem Biodiesel zugesetzt wird, ist von der Menge des im rohen Biodiesel enthaltenen Glycosids abhängig. Wird ein rohes Biodiesel verwendet, wie es unmittelbar nach der Alkoholyse erhalten wird, ist es sinnvoll, größere Mengen des Adsorbens zu verwenden. Wird gemäß einer bevorzugten Ausführungsform das erfindungsgemäße Verfahren zur Nachreinigung eines rohen Biodiesels verwendet, das lediglich noch geringe Verunreinigungen durch Glycoside enthält, kann entsprechend die Menge des zugesetzten Adsorbens gering gehalten werden.

Die Behandlungszeit, während welcher das rohe Biodiesel mit dem Adsorbens in Kontakt gebracht wird, ist an sich von den relativen Mengen an rohem Biodiesel und Adsorbens sowie von der im rohen Biodiesel enthaltenen Menge an Glycosiden, insbesondere Sterylglycosiden, abhängig. Das im erfindungsgemäßen Verfahren verwendete Adsorbens zeichnet sich jedoch wegen seiner stark offenporigen Struktur durch eine relativ schnelle Kinetik aus. Bevorzugt wird die Kontaktzeit zwischen rohem Biodiesel und Adsorbens länger als 5 Minuten, vorzugsweise zwischen 10 und 120 Minuten, besonders bevorzugt zwischen 15 und 60 Minuten, und insbesondere bevorzugt zwischen 5 und 30 Minuten, gewählt.

Bevorzugt wird das erfindungsgemäße Verfahren bei Raumtemperatur oder besonders bevorzugt bei Temperaturen oberhalb von Raumtemperatur durchgeführt. Das rohe Biodiesel weist während der Behandlung mit dem Adsorbens daher bevorzugt eine Temperatur im Bereich von 15 bis 100°C, besonders bevorzugt 30 bis 90°C, auf. Insbesondere bevorzugt weist das rohe Biodiesel während der Behandlung mit dem Adsorbens eine Temperatur im Bereich von 40 bis 80 °C auf. Bevorzugt wird die Reinigung, insbesondere die Feinreinigung des Biodiesels bei einer Temperatur oberhalb der Raumtemperatur durchgeführt. Bei diesen Temperaturen ist die Löslichkeit der Sterylglycoside im Biodiesel erfahrungsgemäß besser. Durch das Erwärmen des rohen Biodiesels lassen sich Sterylglycoside, die nach dem Abkühlen des Biodiesels ausgefallen sind, wieder in Lösung bringen. Das Arbeiten bei erhöhter Temperatur stellt auch sicher, dass die Sterylglycoside durch Adsorption am Adsorbens abgereichert werden und nicht lediglich eine Filtration erfolgt. Dies ist insbesondere von Bedeutung, wenn zur Reinigung des rohen Biodiesels das Adsorbens in Form einer Säulenpackung bereitgestellt wird. Eine Bildung von Niederschlägen würde die Säule verstopfen und auch eine Regeneration einer Säule erschweren. Nach der Behandlung wird das Adsorbens wieder vom Biodiesel abgetrennt. Dazu können übliche Verfahren angewendet werden. Beispielsweise kann das Adsorbens sedimentieren gelassen und das überstehende gereinigte Biodiesel abdekantiert werden. Es ist aber auch möglich, das Adsorbens beispielsweise durch Filtration vom gereinigten Biodiesel abzutrennen.

Wie bereits oben erläutert, zeichnet sich die im erfindungsgemäßen Verfahren verwendete Smektit-Kieselgel-Mischphase durch eine besondere Struktur aus, welche eine aus SiO₂ gebildete amorphe Matrix umfasst, welche relativ starr ist und in welcher sehr kleine Tonpartikel homogen eingelagert sind.

Vorzugsweise weist die im erfindungsgemäßen Verfahren als Adsorbens verwendete Smektit-Kieselgel-Mischphase einen Anteil der amorphen Phase von zumindest 10 Gew.-%, besonders bevorzugt zumindest 20 Gew.-% und insbesondere bevorzugt mindestens 30 Gew.-% auf. Gemäß einer Ausführungsform des erfindungsgemäßen Verfahrens beträgt der Anteil der amorphen Phase an der Smektit-Kieselgel-Mischphase weniger als 90 Gew.-%, gemäß einer weiteren Ausführungsform weniger als 80 Gew.-%. Neben der im Wesentlichen aus SiO₂ gebildeten amorphen Phase umfasst die im erfindungsgemäßen Verfahren verwendete Smektit-Kieselgel-Mischphase eine Smektitphase. Der Anteil der Smektitphase am im erfindungsgemäßen Verfahren verwendeten Adsorbens beträgt bevorzugt weniger als 60 Gew.-%, besonders bevorzugt weniger als 50 Gew.-%, insbesondere bevorzugt weniger als 40 Gew.-%. Gemäß einer Ausführungsform der Erfindung beträgt der Anteil der Smektitphase zumindest 10 Gew.-%, gemäß einer weiteren Ausführungsform zumindest 20 Gew.-%. Das Verhältnis von Smektitphase zu amorpher Phase liegt bevorzugt innerhalb eines Bereichs von 2 bis 0,5, besonders bevorzugt innerhalb eines Bereichs von 1,2 bis 0,8.

Da das im erfindungsgemäßen Verfahren verwendete Adsorbens bevorzugt aus natürlichen Quellen abgebaut wird, kann das Adsorbens neben der Smektit-Kieselgel-Mischphase noch weitere Nebenmineralien aufweisen. Der Anteil der Nebenmineralien am Adsorbens liegt bevorzugt im Bereich von 0,5 bis 40 Gew.-%, besonders bevorzugt 1 bis 30 Gew.-%, insbesondere bevorzugt 3 bis 20 Gew.-%. Beispielhafte Nebenmineralien sind Quarz, Kristobalit, Feldspat und Calcit. Das Adsorbens kann neben den genannten Nebenmineralien aber auch andere Nebenmineralien enthalten.

Die Struktur der als Adsorbens verwendeten Smektit-Kieselgel-Mischphase und der Anteil der amorphen Phase bzw. der Smektitphase kann mit verschiedenen Verfahren ermittelt werden.

Wie bereits erläutert, umfasst die Smektit-Kieselgel-Mischphase eine aus SiO₂ gebildete amorphe Phase. Diese amorphe Phase verdünnt bildlich gesprochen die Smektitphase und führt damit in Abhängigkeit des Anteils der Smektitphase zu einer Verringerung des Verhältnisses von Signal zu Rauschen für einen typischen Reflex eines smektitischen Minerals. So werden beispielsweise Reflexe des Montmorillonits bei kleinen Winkeln durch den sich periodisch wiederholenden Abstand zwischen den Schichten der Montmorillonitstruktur erzeugt. Ferner sind bei der im erfindungsgemäßen Verfahren verwendeten Smektit-Kieselgel-Mischphase die Smektitpartikel in der SiO₂-Matrix stark delaminiert, was zu einer starken Verbreiterung des entsprechenden Reflexes im Diffraktogramm führt.

In einem Röntgendiffraktogramm der im erfindungsgemäßen Verfahren verwendeten Smektit-Kieselgel-Mischphase zeichnen sich die Reflexe kaum über dem Rauschen ab. Das Verhältnis von Signal zu Rauschen liegt bei den von der Smektit-Kieselgel-Mischphase erzeugten Reflexen nahe 1 und liegt gemäß einer Ausführungsform im Bereich von 1 bis 1,2. Im Diffraktogramm können jedoch auch scharfe Reflexe auftreten. Diese sind jedoch auf Verunreinigungen durch Nebenmineralien zurückzuführen, wie Quarz. Die von derartigen Nebenmineralien erzeugten Reflexe werden für die Berechnung des Verhältnisses von Signal und Rauschen nicht berücksichtigt.

Die beim erfindungsgemäßen Verfahren als Adsorbens verwendete Smektit-Kieselgel-Mischphase zeigt nahezu keinen 001-Reflex, welcher für den Schichtabstand in der Kristallstruktur von Bentonit charakteristisch ist. Das Verhältnis Signal/Rauschen des 001-Reflexes der smektitischen Partikel beträgt vorzugsweise weniger als 1,2, und liegt besonders bevorzugt in einem Bereich von 1,0 bis 1,1.

Der Anteil der amorphen Siliciumdioxidphase und der smektitischen Phase lässt sich durch quantitative Röntgendiffraktometrie bestimmen. Die Details des Verfahrens sind beispielsweise beschrieben in "Handbook of Clay Science", F. Bergaya, B.K.G. Therry, G. Nagaly (Hrsgb.), Elsevier, Oxford, Amsterdam, 2006, Kap. 12.1: I. Srodon, "Identification and Quantitative Analysis of Clay Minerals; X-Ray Diffraction and the Identification and Analysis of Clay Minerals", D.M. Moora, R.C. Raynolds, Oxford University Press, New York, 1997, S. 765ff.

Die quantitative Röntgendiffraktometrie beruht auf dem Rietveld-Algorithmus. Dieser Algorithmus wurde ursprünglich von H.M. Rietveld für die Verfeinerung von Kristallstrukturen entwickelt. Dieses Verfahren wird in der Mineralogie als Standardverfahren angewendet. Ein Beispiel aus der Zementindustrie ist die quantitative Analyse von Mineralphasen in unbekannten mineralischen Proben.

Der Rietveld-Verfeinerungsalgorithmus beruht auf einer Anpassung eines simulierten Diffraktogramms an ein gemessenes Diffraktogramm. Zunächst werden die mineralischen Phasen durch Zuordnung der im Diffraktogramm auftretenden Reflexe bestimmt. Auf der Basis der nachgewiesenen Minerale wird dann auf der Grundlage der Kristallstruktur der in der Probe nachgewiesenen Mineralien ein Diffraktogramm berechnet. In den folgenden Schritten werden die Parameter des Modells angepasst, so dass eine gute Übereinstimmung zwischen dem berechneten und dem gemessenen Diffraktogramm erreicht wird. Dazu kann beispielsweise das Verfahren der kleinsten Fehlerquadrate verwendet werden. Die Details des Verfahrens sind beispielsweise beschrieben in: R.A. Young: "The Rietveld Method", Oxford University Press, 1995. Mit dem Rietveld-Verfahren können auch bei stark überlappenden Reflexen zuverlässige Aussagen aus dem Diffraktogramm getroffen werden.

Die Anwendung dieses Verfahrens auf die Analyse von mineralischen Proben wird beispielsweise auf D.K. McCarthy "Quantitative Mineral Analysis of Clay-bearing Mixtures", in: "The Reynolds Cup" Contest. IUCr CPD Newsletter 27, 2002, 12-16, verwiesen.

Bei der praktischen Anwendung wird die quantitative Bestimmung der verschiedenen Mineralien in unbekannten Proben mit Hilfe einer kommerziell angebotenen Software durchgeführt. Eine derartige Software wird beispielsweise unter der Bezeichnung "Seifert AutoQuan" von der Seifert/GE Inspection Technologies, Ahrensburg, Deutschland, angeboten.

Die im erfindungsgemäßen Verfahren als Adsorbens verwendete Smektit-Kieselgel-Mischphase quillt in Wasser kaum. Das Adsorbens lässt sich daher vom gereinigten Biodiesel leicht abtrennen. Vorzugsweise weist das Adsorbens nach Quellen in Wasser für 1 Stunde ein Sedimentvolumen von weniger als 15 ml/2g, besonders bevorzugt von weniger als 10 ml/2g und insbesondere bevorzugt von weniger als 7 ml/2g auf.

Die als Adsorbens verwendete Smektit-Kieselgel-Mischphase weist bevorzugt eine Kationenaustauscherkapazität von zumindest 40 meq/100 g, besonders bevorzugt von mehr als 45 meq/100 g, auf, und wird insbesondere bevorzugt in einem Bereich von 44 bis 70 meq/100 g gewählt. Durch die hohe Ionenaustauscherkapazität unterscheidet sich die im erfindungsgemäßen Verfahren verwendete Smektit-Kieselgel-Mischphase beispielsweise von hochaktiven Bleicherden, welche durch Extraktion von Schichtsilikaten mit starken Säuren bei Siedehitze erhalten werden. Diese zeichnen sich durch eine sehr niedrige Kationenaustauscherkapazität aus, die üblicherweise unterhalb von 40 meq/100 g liegt und in den meisten Fällen weniger als 30 meq/100 g beträgt. Die im erfindungsgemäßen Verfahren verwendete Smektit-Kieselgel-Mischphase unterscheidet sich daher in drastischer Weise von solchen hochaktiven Bleicherden.

Das im erfindungsgemäßen Verfahren verwendete Adsorbens unterscheidet sich auch in charakteristischer Weise von den sogenannten oberflächenmodifizierten Bleicherden. Diese oberflächenmodifizierten Bleicherden werden erhalten, indem ein Schichtsilikat mit einer Säure belegt wird, beispielsweise durch Besprühen eines Tonminerals, d.h. eines Schichtsilikats mit Säure. Diese oberflächenmodifizierten Bleicherden zeigen zwar eine ähnliche Kationenaustauscherkapazität wie das in erfindungsgemäßen Verfahren verwendete Adsorbens. Die oberflächenmodifizierten Bleicherden weisen jedoch ein deutlich niedrigeres Porenvolumen auf, was sie in charakteristischer Weise von dem im erfindungsgemäßen Verfahren verwendeten Adsorbens unterscheidet. Bei einer Verwendung von oberflächenmodifizierten Bleicherden kann das rohe Biodiesel nicht einfach in die inneren Abschnitte der Adsorbenspartikel gelangen, da diese Tonmineralien quellen und daher der weitere Zutritt des rohen Biodiesels zu den Zwischenschichten des Schichtsilikats blockiert ist. Die Adsorptionsgeschwindigkeit ist für solche o-berflächenaktivierten Bleicherden daher niedrig.

Die im erfindungsgemäßen Verfahren verwendete Smektit-Kieselgel-Mischphase zeichnet sich insbesondere durch einen hohen Gehalt an SiO₂ aus. Neben Silicium können jedoch auch andere Metalle bzw. Metalloxide in der Mischphase enthalten sein. Die im folgenden angegebenen prozentualen Anteile beziehen sich auf eine Smektit-Kieselgel-Mischphase, welche bei 105°C bis zur Gewichtskonstanz getrocknet wurde.

Vorzugsweise weist die Smektit-Kieselgel-Mischphase einen niedrigen Aluminiumgehalt auf. Der Aluminiumgehalt, berechnet als Al₂O₃, beträgt bevorzugt weniger als 15 Gew.-%, besonders bevorzugt weniger als 10 Gew.-%. Gemäß einer Ausführungsform beträgt der Aluminiumgehalt, berechnet als Al₂O₃, mehr als 2 Gew.-%. Gemäß einer weiteren Ausführungsform beträgt der Aluminiumgehalt mehr als 4 Gew.-%.

Gemäß einer weiteren Ausführungsform des erfindungsgemäßen Verfahrens enthält die als Adsorbens verwendete Smektit-Kieselgel-Mischphase Magnesium in einer Menge, berechnet als *M*gO, von weniger als 7 Gew.-%, besonders bevorzugt von weniger als 6 Gew.-%, insbesondere bevorzugt von weniger als 5 Gew.-%. Gemäß einer Ausführungsform des erfindungsgemäßen Verfahrens enthält das Adsorbens zumindest 0,5 Gew.-% Magnesium, besonders bevorzugt zumindest 1,0 Gew.-%, jeweils berechnet als MgO. Gemäß einer weiteren Ausführungsform enthält das Adsorbens zumindest 2 Gew.-% MgO.

Gemäß einer weiteren Ausführungsform kann das Adsorbens auch Eisen umfassen. Die in der Smektit-Kieselgel-Mischphase enthaltene Eisenmenge, berechnet als Fe₂O₃, beträgt vorzugsweise weniger als 8 Gew.-%. Gemäß einer weiteren Ausführungsform beträgt der Eisengehalt der Smektit-Kieselgel-Mischphase weniger als 6 Gew.-% und gemäß einer weiteren Ausführungsform weniger als 5 Gew.-%. Gemäß einer weiteren Ausführungsform der Erfindung enthält das Adsorbens Eisen in einer Menge, berechnet als Fe₂O₃, von zumindest 1 Gew.-%, und gemäß einer weiteren Ausführungsform in einer Menge von zumindest 2 Gew.-%.

Die Erfinder gehen davon aus, dass sich die Verteilung der Porenradien auf die Aktivität des Adsorbens auswirkt. Gemäß einer ersten Ausführungsform des erfindungsgemäßen Verfahren werden vorzugsweise zumindest 60 %, besonders bevorzugt 65 bis 70 % des gesamten Porenvolumens des Adsorbens von Poren erbracht, welche einen Porendurchmesser von zumindest 140 Å aufweisen. Bevorzugt werden zumindest 40 %, besonders bevorzugt zumindest 50 %, insbesondere bevorzugt 55 bis 60 % des Gesamtporenvolumens von Poren erbracht, welche einen Porendurchmesser von weniger als 250 Å und vorzugsweise mindestens 20 %, besonders bevorzugt mindestens 25 % des Gesamtporenvolumens von Poren erbracht, welche einen Porendurchmesser von 140 bis 250 Å aufweisen. Vorzugsweise gehen weniger als 20 % des Gesamtporenvolumens, besonders bevorzugt weniger als 15 %, insbesondere bevorzugt 10 bis 14 % des Gesamtporenvolumens auf Poren zurück, die einen Porendurchmesser von > 800 Ä aufweisen.

Gemäß einer weiteren bevorzugten Ausführungsform werden zumindest 20 %, bevorzugt zumindest 25 %, besonders bevorzugt zumindest 30 % und insbesondere bevorzugt 33 bis 40 % des Gesamtporenvolumens der Smektit-Kieselgel-Mischphase von Poren erbracht, die einen Porendurchmesser von weniger als 140 Å aufweisen.

Weiter werden bevorzugt zumindest 10 %, besonders bevorzugt zumindest 13 %, und insbesondere bevorzugt 15 bis 20 % des Gesamtporenvolumens der Smektit-Kieselgel-Mischphase durch Poren erbracht, welche einen Porendurchmesser von 75 bis 150 Å aufweisen.

Gemäß einer weiteren bevorzugten Ausführungsform werden weniger als 40 %, bevorzugt weniger als 35 %, insbesondere bevorzugt 25 bis 33 % des Gesamtporenvolumens der Smektit-Kieselgel-Mischphase von Poren erbracht, welche einen Porendurchmesser von 250 bis 800 Å aufweisen.

Gemäß einer weiteren bevorzugten Ausführungsform werden zumindest 12 %, bevorzugt zumindest 14 %, besonders bevorzugt 14 bis 20 % des Gesamtporenvolumens von Poren erbracht, die einen Porendurchmesser von weniger als 75 Å aufweisen.

Nach einer weiteren Ausführungsform werden bevorzugt weniger als 80 %, besonders bevorzugt weniger als 75 %, insbesondere bevorzugt 60 bis 70 % des Gesamtporenvolumens der Smektit-Kieselgel-Mischphase von Poren erbracht, welche einen Porendurchmesser von mehr als 140 Å aufweisen.

Gemäß einer weiteren bevorzugten Ausführungsform werden weniger als 60 %, bevorzugt weniger als 50 %, besonders bevorzugt 40 bis 45 % des Gesamtporenvolumens der Smektit-Kieselgel-Mischphase von Poren erbracht, welche einen Porendurchmesser von zumindest 250 Å aufweisen.

Bevorzugte Anteile am Gesamtporenvolumen relativ zum Porendurchmesser sind in der folgenden Tabelle 1 zusammengefasst. Tabelle 1: Bevorzugte prozentuale Anteile am Porenvolumen, welche von Poren mit einem bestimmten Porendurchmesser in einer Smektit-Kieselgel-Mischphase erbracht werden, welche in einer ersten Ausführungsform des erfindungsgemäßen Verfahren als Adsorbens verwendet wird.

| Porendurchmesser | bevorzugt | besonders bevorzugt | insbesondere bevorzugt |
|---|---|---|---|
| 0 -75 Å | > 12 % | > 14 % | 15 - 20 % |
| 75 - 140 Å | > 10 % | > 13 % | 15 - 20 % |
| 140 - 250 Å | > 15 % | > 20 % | 21 - 25 % |
| 250 - 800 Å | < 40 % | < 35 % | 25 - 33 % |
| > 800 Å | < 20 % | < 15 % | 10 - 14 % |

Bei einer zweiten Ausführungsform des erfindungsgemäßen Verfahrens wird eine Smektit-Kieselgel-Mischphase als Adsorbens verwendet, bei welcher bevorzugt zumindest 20 %, besonders bevorzugt zumindest 22 % des Porenvolumens, insbesondere bevorzugt 20 bis 30 % des Porenvolumens durch Poren erbracht wird, welche einen Durchmesser von weniger als 75 Å aufweisen.

Weiter bevorzugt werden zumindest 45 %, besonders bevorzugt zumindest 50 % des Gesamtporenvolumens der Smektit-Kieselgel-Mischphase von Poren erbracht, welche einen Porendurchmesser von weniger als 140 Å aufweisen.

Weiter werden bevorzugt weniger als 40 %, besonders bevorzugt weniger als 35 % des Gesamtporenvolumens von Poren erbracht, welche einen Porendurchmesser von mehr als 250 Å aufweisen. Die in der zweiten Ausführungsform des erfindungsgemäßen Verfahrens verwendete Smektit-Kieselgel-Mischphase weist nur einen geringen Anteil an großen Poren auf. Dennoch können im Biodiesel vorhandene Glycoside innerhalb eines Zeitrahmens entfernt werden, welcher für eine industrielle Anwendung geeignet ist.

In Tabelle 2 sind bevorzugte Anteile am Gesamtporenvolumen zusammengefasst, welche von Poren mit bestimmten Durchmesser erbracht werden, wobei das Adsorbens einem Adsorbens entspricht, wie es in einer zweiten Ausführungsform des erfindungsgemäßen Verfahrens verwendet wird.

Tabelle 2: Bevorzugte prozentuale Anteile am Porenvolumen, welche von Poren mit einem bestimmten Porendurchmesser in einer Smektit-Kieselgel-Mischphase erbracht werden, welche in einer zweiten Ausführungsform des erfindungsgemäßen Verfahren als Adsorbens verwendet wird.

| Porendurchmesser | bevorzugter Anteil | besonders bevorzugter Anteil |
|---|---|---|
| 0 - 250 Å | > 55 % | 60 - 80 % |
| 0 - 800 Å | < 90 % | 70 - 85 % |
| > 800 Å | < 30 % | 10 - 25 % |
| 75 - 140 Å | < 40 % | 20 - 35 % |
| 140 - 250 Å | < 25 % | 10 - 20 % |
| 250 - 800 Å | < 20 % | 5 - 20 % |
| 75 - 800 Å | < 65 % | 50 - 60 % |
| > 75 Å | < 85 % | 60 - 80 % |
| > 140 Å | < 60 % | 30 - 50 % |
| > 250 Å | < 40 % | 25 - 35 % |

Das erfindungsgemäße Verfahren eignet sich für die Entfernung von Glycosiden aus Biodiesel. Wie bereits erläutert, eignet sich das Verfahren insbesondere für die Nachreinigung von bereits vorgereinigtem Biodiesel. Mit dem erfindungsgemäßen Verfahren lassen sich auch sehr geringe Mengen an Glycosiden aus dem Biodiesel entfernen. Bei dieser Ausführungsform wird also ein an sich schon sehr reines Biodiesel einer Nachreinigung unterzogen. Gemäß des erfindungsgemäßen Verfahrens weist das rohe Biodiesel einen Glycosidgehalt von weniger als 500 ppmw auf. Das erfindungsgemäße Verfahren eignet sich insbesondere für die Entfernung sehr geringer Mengen an Glycosiden, insbesondere Sterylglycosiden. Gemäß einer bevorzugten Ausführungsform weist das rohe Biodiesel daher einen Glycosidgehalt von weniger als 100 ppmw, weiter bevorzugt weniger als 80 ppmw, besonders bevorzugt weniger als 50 ppmw auf. Gemäß einer Ausführungsform weist das rohe Biodiesel einen Glycosidgehalt von mehr als 10 ppmw, gemäß einer weiteren Ausführungsform von mehr als 20 ppmw auf.

Unter Glycosiden werden allgemeine Verbindungen aus Kohlehydraten und Aglykonen verstanden. Als Kohlenhydrate können sowohl Mono- als auch Oligosaccharide auftreten. Als Aglykone können an sich alle Verbindungen wirken, die unter Ausbildung einer glycosidischen Bindung mit dem Kohlenhydrat reagieren können. Das Aglykon kann dabei sowohl α- als auch β-glycosidisch gebunden sein. Als Kohlenhydrate können sowohl Aldosen als auch Ketosen auftreten, die sowohl als 5- oder 6- Ringe, also als Furanoside oder Pyranoside vorliegen können.

Insbesondere eignet sich das erfindungsgemäße Verfahren zur Abtrennung von Sterylglycosiden aus rohem Biodiesel. Sterylglycoside sind Glycoside, welches Sterine als Aglykon umfassen. Wie bereits einleitend erläutert, sind Sterine stickstofffreie, polyzyklische, hydroaromatische Verbindungen, insbesondere Derivate des Gonans bzw. des Perhydro-1H-cyclopenta-[α]phenatrens. Beispiele für Sterylglycoside sind Sitosteryl-, Stigmasterol- oder Campesterol-ß-Glycosid. Bevorzugt liegen die Sterylglycoside in Form eines Glucosids vor.

Die Glycoside, insbesondere Sterylglycoside liegen bevorzugt in nicht acylierter Form vor. Durch die polaren Hydroxygruppen des Saccharids weisen die Glycoside, insbesondere Sterylglycoside, eine sehr schlechte Löslichkeit in Biodiesel auf. Sie bilden daher sehr leicht einen schwerlöslichen Niederschlag im Biodiesel aus. Wie bereits erläutert, eignet sich das erfindungsgemäße Verfahren insbesondere für die Reinigung von Biodiesel, welches noch geringe Verunreinigungen durch Glycoside, insbesondere Sterylglycoside aufweist. Diese liegen dann als sehr feiner Niederschlag vor.

Gemäß einer Ausführungsform des Verfahrens umfasst das rohe Biodiesel daher das zumindest eine Glycosid, insbesondere Sterylglycosid, in Form eines feinteiligen Niederschlags, wobei die mittlere Partikelgröße des Niederschlags (D₅₀) kleiner als 200 µm, bevorzugt kleiner als 150 µm ist. Vorzugsweise liegt die Partikelgröße des Niederschlags im Bereich von 10 bis 100 µm, besonders bevorzugt im Bereich von 10 bis 20 µm. Die mittlere Partikelgröße wird bei Raumtemperatur (20 °C) beispielsweise durch Laserbeugung bestimmt.

Das Glycosid, insbesondere Sterylglycosid, fällt in Form von Kristallagglomeraten aus, wobei die Agglomerate bei Betrachtung unter dem Mikroskop eine amorphe Struktur aus gelartig locker miteinander verbundenen Kristalliten zeigen. Diese Agglomerate bestehen meist nicht aus reinem Glycosid, insbesondere Sterylglycosid, sondern enthalten noch Fettsäureester, die am Niederschlag adsorbiert sind.

Um das Adsorbens leicht vom gereinigten Biodiesel abtrennen zu können, wird das Adsorbens gemäß einer bevorzugten Ausführungsform in Form eines Granulats bereitgestellt. Ein Pulver eignet sich insbesondere dann, wenn das Adsorbens in das rohe Biodiesel eingerührt wird, als in Form einer Suspension vorliegt. Ein Granulat eignet sich insbesondere dann, wenn das Adsorbens in Form einer Säule oder einer Kartusche bereitgestellt wird.

Die Partikelgröße des Pulvers wird allgemein so eingestellt, dass sich das Adsorbens ohne Schwierigkeiten mit einem geeigneten Verfahren, wie beispielsweise Filtration, innerhalb einer geeigneten Zeitspanne vom gereinigten Biodiesel abtrennen lässt. Wird ein Pulver verwendet, welches im rohen Biodiesel suspendiert wird, beträgt der Trockensiebrückstand des Adsorbens auf einem Sieb mit einer Maschenweite von 63 µm vorzugsweise mehr als 25 Gew.-% und liegt vorzugsweise in einem Bereich von 30 bis 50 Gew.-% und der Trockensiebrückstand auf einem Sieb einer Maschenweite von 25 µm beträgt vorzugsweise mehr als 80 Gew.-% und liegt bevorzugt in einem Bereich von 85 bis 98 Gew.-%. Weiterhin beträgt der Trockensiebrückstand auf einem Sieb mit einer Maschenweite von 45 µm bevorzugt mehr als 35 Gew.-%, besonders bevorzugt mehr als 45 Gew.-%.

Insbesondere für eine Anwendung des Adsorbens in Form einer Säulenpackung sind jedoch auch höhere Korngrößen geeignet. Hierzu wird das Adsorbens bevorzugt in Form eines Granulats eingesetzt. Insbesondere für die Herstellung von Säulenpackungen wird bevorzugt ein Granulat verwendet, welches eine Korngröße von mehr als 0,1 mm aufweist. Bevorzugt weist das Granulat eine Korngröße im Bereich von 0,2 bis 5 mm, insbesondere bevorzugt 0,3 bis 2 mm auf. Die Korngröße lässt sich beispielsweise durch Sieben einstellen.

Das Granulat kann nach üblichen Verfahren hergestellt werden, indem beispielsweise das feingemahlene Adsorbens mit einem Granuliermittel, beispielsweise Wasser, beaufschlagt wird und dann in einer üblichen Granuliervorrichtung in einer mechanisch erzeugten Wirbelschicht granuliert wird. Es können jedoch auch andere Verfahren eingesetzt werden, um das Granulat herzustellen. So kann das pulverförmige Adsorbens beispielsweise durch Kompaktierung zu einem Granulat geformt werden.

Gemäß einer bevorzugten Ausführungsform lässt sich das Granulat bereitstellen, in dem das Adsorbens luftgetrocknet, gebrochen und gesiebt wird. Das mit diesem Verfahren hergestellte Granulat weist eine ausreichende Festigkeit auf, so dass es bei der Behandlung des rohen Biodiesel nicht zu einem feinen Pulver verfällt. Um die Stabilität des auf diese Weise hergestellten Granulats zu verbessern, kann das Granulat auch noch einer Hochtemperaturbehandlung unterworfen werden. Vorzugsweise wird das Granulat dazu für zumindest 30 Minuten, bevorzugt zumindest 45 Minuten, und besonders bevorzugt für eine Dauer im Bereich von 1 bis 2 Stunden auf eine Temperatur von vorzugsweise zumindest 500 °C, bevorzugt zumindest 600 °C und besonders bevorzugt auf eine Temperatur im Bereich von 650 °C bis 800 °C erhitzt. Das Granulat wird durch die Wärmebehandlung in einen Eigenschaften kaum verändert.

Wie bereits erläutert, kann das Adsorbens direkt zum rohen Biodiesel gegeben werden, wobei das Biodiesel bevorzugt gerührt wird. Die Menge des Adsorbens wird bevorzugt in einen Bereich von 0,05 bis 5 Gew.-%, besonders bevorzugt 0,1 bis 2 Gew.-% gewählt. Die prozentualen Anteile beziehen sich auf das Gewicht des rohen Biodiesels.

Gemäß einer bevorzugten Ausführungsform wird das Adsorbens in einer Säulenpackung bereitgestellt. Das rohe Biodiesel kann dann durch die Säulenpackung geleitet werden. Die Säulenpackung kann beispielsweise in Form einer Kartusche bereitgestellt werden. Bei der praktischen Durchführung kann das rohe Biodiesel dann solange durch die Kartusche geleitet werden, bis die Adsorptionskapazität des in der Kartusche enthaltenen Adsorbens erschöpft ist. Die Kartusche kann dann einfach gegen eine neue Kartusche ausgetauscht werden. Das in der Kartusche konzentrierte Glycosid kann dann beispielsweise zurückgewonnen werden.

Wird das Adsorbens in Form einer Säulenpackung bereitgestellt, wird das Adsorbens bevorzugt in Form größerer Körner bereitgestellt, um einen übermäßigen Druckabfall über die Säulenpackung hinweg zu verhindern.

Bevorzugt wird daher das Adsorbens in Form eines Granulats verwendet, welches eine Partikeldurchmesser von mehr als 0,5 mm, insbesondere bevorzugt einen Partikeldurchmesser im Bereich von 1 bis 5 mm aufweist. Wie bereits erläutert, lässt sich ein derartiges Granulat sehr einfach dadurch herstellen, dass die Smektit-Kieselgemischphase entweder direkt nach dem Abbau aus einer Mine oder ggf. nach einem Reinigungsschritt zur Abtrennung zumindest eines Anteils der Nebenminerale luftgetrocknet und anschließend gebrochen wird. Das Granulat der gewünschten Korngröße wird dann durch Sieben abgetrennt. Ggf. können die so hergestellten Granulatpartikel noch hitzebehandelt werden, um deren Stabilität zu erhöhen.

Um ein Verstopfen der Säule zu vermeiden, wird der rohe Biodiesel bevorzugt auf eine Temperatur oberhalb der Raumtemperatur erwärmt.

Der Einsatz des Adsorbens in Form einer Säule ermöglicht auch eine Regenerierung der Säule, z.B. mit Lösemitteln, wodurch die Säulenpackung mehrfach verwendet werden kann. Geeignete Regerationsmittel sind beispielsweise Gemische aus Alkoholen und Alkanen oder chlorierten Kohlenwasserstoffen. Ggf. kann die Regenerierung auch mit einem Gradienten durchgeführt werden, wobei das Biodiesel zunächst mit einem relativ unpolaren Lösungsmittel von der Säule gewaschen wird und dann zu einem polareren Lösungsmittel übergegangen wird, beispielsweise einem Alkohol, wie Methanol oder Ethanol, um die an das Adsorbens gebundenen Verunreinigungen, insbesondere Sterylglycoside, aus der Säule zu eluieren.

Die im erfindungsgemäßen Verfahren verwendete Smektit-Kieselgel-Mischphase reagiert bevorzugt neutral bis leicht alkalisch. Eine Suspension von 10 Gew.-% des Adsorbens in Wasser weist bevorzugt einen pH-Wert im Bereich von 5,5 bis 9,0, besonders bevorzugt 5,9 bis 8,7 und insbesondere bevorzugt im Bereich von 7,0 bis 8,5 auf. Der pH-Wert wird mit Hilfe einer pH-Elektrode gemäß DIN ISO 7879 bestimmt.

Die Erfindung wird im Weiteren an Hand von Beispielen näher erläutert.

Die physikalischen Eigenschaften des Adsorbens wurden mit den folgenden Verfahren bestimmt:

### BET-Oberfläche/Porenvolumen nach BJH und BET:

Die Oberfläche und das Porenvolumen wurden mit einem vollautomatischen Stickstoffporosimeter der Firma Micormeritics Typ ASAP 2010 bestimmt.

Die Probe wird im Hochvakuum auf die Temperatur von flüssigem Stickstoff abgekühlt. Anschließend wird kontinuierlich Stickstoff in die Probenkammern dosiert. Durch die Erfassung der adsorbierten Gasmenge als Funktion des Druckes wird bei konstanter Temperatur eine Adsorptionsisotherme ermittelt. In einem Druckausgleich wird das Analysengas schrittweise entfernt und eine Desorptionsisotherme aufgenommen.

Zur Ermittlung der spezifischen Oberfläche und der Porosität nach der BIT-Theorie werden die Daten gemäß DIN 66131 ausgewertet.

Das Porenvolumen wird ferner aus den Messdaten unter Anwendung der BJH-Methode ermittelt (I.P. Barret, L.G. Joiner, P.P. Haienda, J.Am.Chem.Soc. 73, 1991, 373). Bei diesem Verfahren werden auch Effekte der Kapillarkondensation berücksichtigt. Porenvolumina bestimmter Volumengrößenbereiche werden durch Aufsummieren inkrementeller Porenvolumina bestimmt, die aus der Auswertung der Adsorptionsisotherme nach BJH erhalten werden. Das Gesamtporenvolumen nach BJH-Methode bezieht sich auf Poren mit einem Durchmesser mit 1,7 bis 300 nm.

### Wassergehalt:

Der Wassergehalt der Produkte bei 105°C wird unter Verwendung der Methode DIN/ISO-787/2 ermittelt.

### Silikatanalyse:

### (a) Probenaufschluss

Diese Analyse beruht auf dem Totalaufschluss des Rohtons bzw. des entsprechenden Produktes. Nach dem Auflösen der Feststoffe werden die Einzelkomponenten mit herkömmlichen spezifischen Analysemethoden, wie z.B. ICB, analysiert und quantifiziert.

Für den Probenaufschluss werden ca. 10 g der zu untersuchenden Probe fein vermahlen und 2 - 3 Stunden lang im Trockenschrank bei 105 °C bis zur Gewichtskonstanz getrocknet. Ca. 1,4 g der getrockneten Probe werden in einen Platintiegel gegeben und die Probeneinwaage bis zu einer Genauigkeit von 0,001 g ermittelt. Danach wird die Probe im Platintiegel mit der 4 bis 6-fachen Gewichtsmenge einer Mischung aus Natriumcarbonat und Kaliumcarbonat (1 : 1) vermischt. Die Mischung wird mit dem Platintiegel in einen Simon-Müller-Ofen gestellt und 2 - 3 Stunden bei 800 - 850 °C geschmolzen. Der Platintiegel mit der Schmelze wird mit einer Platinzange aus dem Ofen genommen und zum Abkühlen Stehen gelassen. Die abgekühlte Schmelze wird mit wenig destilliertem Wasser in eine Kasserolle gespült und vorsichtig mit konzentrierter Salzsäure versetzt. Nach Beendigung der Gasentwicklung wird die Lösung bis zur Trockene eingedampft. Der Rückstand wird erneut in 20 ml konz. Salzsäure aufgenommen und erneut zur Trockene eingedampft. Das Eindampfen mit Salzsäure wird noch einmal wiederholt. Der Rückstand wird mit ca. 5 - 10 ml Salzsäure (12 %) angefeuchtet, mit ca. 100 ml dest. Wasser versetzt und erwärmt. Unlösliches SiO₂ wird abfiltriert, der Rückstand drei Mal mit heißer Salzsäure (12 %) gewaschen und dann mit heißem Wasser (dest.) gewaschen, bis das Filtratwasser chloridfrei ist.

### (b) Silikatbestimmung

Das SiO₂ wird mit dem Filter verascht und ausgewogen.

### (c) Bestimmung von Aluminium, Eisen, Calcium und Magnesium

Das bei der Silikatbestimmung gesammelte Filtrat wird in einen 500 ml Messkolben überführt und bis zur Eichmarke mit destilliertem Wasser ergänzt. Aus dieser Lösung werden dann mittels FAAS Aluminium-, Eisen-, Calcium- und Magnesiumbestimmung durchgeführt.

### (d) Bestimmung von Kalium, Natrium und Lithium

500 mg der getrockneten Probe werden auf 0,1 mg genau in einer Platinschale eingewogen. Danach wird die Probe mit ca. 1 - 2 ml dest. Wasser durchfeuchtet und 4 Tropfen konzentrierte Schwefelsäure zugegeben. Danach wird dreimal mit ca. 10 - 20 ml konz. HF bis zur Trockene im Sandbad eingedampft. Zuletzt wird mit H₂SO₄ befeuchtet und auf der Ofenplatte bis zur Trockene abgeraucht. Nach kurzem Glühen der Platinschale werden ca. 40 ml dest. Wasser und 5 ml Salzsäure (18 %) zugegeben und die Mischung aufgekocht. Die erhaltene Lösung wird in einen 250 ml Messkolben überführt und bis zur Eichmarke mit dest. Wasser ergänzt. Aus dieser Lösung wird mittels EAS der Natrium-, Kalium- und Lithiumgehalt ermittelt.

### Glühverlust:

In einem geglühten gewogenen Porzellantiegel mit Deckel wird ca. 1 g getrocknete Probe auf 0,1 mg genau eingewogen und 2 h lang bei 1000 °C im Muffelofen geglüht. Danach wird der Tiegel im Exsikkator abgekühlt und ausgewogen.

### Ionenaustauschkapazität:

Zur Bestimmung der Kationenaustauschkapazität wird das zu untersuchende Tonmaterial über einen Zeitraum von 2 Stunden bei 105°C getrocknet. Danach wird das getrocknete Tonmaterial mit einem Überschuss an wässriger 2N NH₄Cl-Lösung 1 Stunde unter Rückfluss zur Reaktion gebracht. Nach einer Standzeit von 16 Stunden bei Raumtemperatur wird filtriert, worauf der Filterkuchen gewaschen, getrocknet und vermahlen wird und der NH₄-Gehalt im Tonmaterial durch Stickstoffbestimmung (CHN-Analysator "Vario EL III" der Firma Elementar in Hanau) nach den Herstellerangaben ermittelt. Der Anteil und die Art der ausgetauschten Metallionen wird im Filtrat durch ICP-Spektroskopie bestimmt.

### Bestimmung des Sedimentvolumens:

Ein graduierter 100 ml Messzylinder wird mit 100 ml destilliertem Wasser gefüllt. 2 g der zu vermessenden Substanz werden langsam und portionsweise, je etwa 0,1 bis 0,2 g mit einem Spatel auf die Oberfläche des Wassers gegeben. Nach dem Absinken einer zugegebenen Portion wird die nächste Portion zugegeben. Nachdem die 2 g Substanz zugegeben und auf den Grund des Messzylinders abgesunken sind, wird der Zylinder für eine Stunde bei Raumtemperatur stehen gelassen. Anschließend wird an der Graduierung des Messzylinders die Höhe des Sedimentsvolumens in ml/2g abgelesen. Für die Bestimmung des Sedimentvolumens nach 3-tägiger Lagerung in Wasser wird der Probenansatz mit Parafilm^{®} verschlossen und für 3 Tage bei Raumtemperatur erschütterungsfrei stehen gelassen. Danach wird an der Graduierung des Messzylinders das Sedimentvolumen abgelesen.

### Bestimmung des Montmorillonitgehalts über die Methylenblauadsorption

Der Methylenblauwert ist ein Maß für die innere Oberfläche der Tonmaterialien.

### a) Herstellung einer Tetranatriumdiphosphat-Lösung

5,41 g Tetranatriumdiphosphat werden auf 0,001 g genau in einen 1000 ml Messkolben eingewogen und unter Schütteln bis zur Eichmarke mit dest. Wasser aufgefüllt.

### b) Herstellung einer 0,5 %-igen Methylenblaulösung

In einem 2000 ml Becherglas werden 125 g Methylenblau in ca. 1500 ml dest. Wasser gelöst. Die Lösung wird abdekantiert und auf 25 l mit dest. Wasser aufgefüllt.

0,5 g feuchter Testbentonit mit bekannter innerer Oberfläche werden in einem Erlenmeyerkolben auf 0,001 g genau eingewogen. Es werden 50 ml Tetranatriumdiphosphatlösung zugegeben und die Mischung 5 Minuten zum Sieden erhitzt. Nach dem Abkühlen auf Raumtemperatur werden 10 ml 0,5 molare H₂SO₄ zugegeben und 80 bis 95 % des zu erwartenden Endverbrauchs an Methylenblaulösung zugegeben. Mit dem Glasstab wird ein Tropfen der Suspension aufgenommen und auf ein Filterpapier gegeben. Es bildet sich ein blau-schwarzer Fleck mit einem farblosen Hof. Es wird nun in Portionen von 1 ml weitere Methylenblaulösung zugegeben und die Tüpfelprobe wiederholt. Die Zugabe erfolgt solange, bis sich der Hof leicht hellblau färbt, also die zugegebene Methylenblaumenge nicht mehr vom Testbentonit absorbiert wird.

### c) Prüfung von Tonmaterialien

Die Prüfung des Tonmaterials wird in der gleichen Weise durchgeführt wie für den Testbentonit. Aus der verbrauchten Menge an Methylenblaulösung lässt sich die innere Oberfläche des Tonmaterials berechnen.

381 mg Methylenblau/g Ton entsprechen nach diesem Verfahren einem Gehalt von 100 % Montmorillonit.

### Bestimmung des Trockensiebrückstandes

Etwa 50 g des zu untersuchenden lufttrockenen Tonmaterials werden auf einem Sieb der entsprechenden Maschenweite eingewogen. Das Sieb wird an einen Staubsauger angeschlossen, der über ein unter dem Siebboden kreisenden Saugschlitz alle Anteile, die feiner als das Sieb sind, durch das Sieb heraussaugt. Das Sieb wird mit einem Plastikdeckel abgedeckt und der Staubsauger eingeschaltet. Nach 5 Minuten wird der Staubsauger abgeschaltet und die Menge der auf dem Sieb verbliebenen gröberen Anteile durch Differenzwägung ermittelt.

### Bestimmung des Nasssiebrückstandes

Es wird zunächst eine 5 %-ige Suspension hergestellt, indem eine entsprechende Menge des zu untersuchenden Tonmaterials bei ca. 930 UpM ca. 5 Minuten in Wasser eingerührt wird. Die Suspension wird für weitere 15 Minuten bei ca. 1865 UpM gerührt und die Suspension dann durch ein Sieb der gewünschten Maschenweite gegossen. Der Rückstand wird so lange mit Leitungswasser gewaschen, bis das Waschwasser klar abläuft. Das Sieb mit dem Rückstand wird dann für 5 Minuten in ein Ultraschallbad gesetzt, um restliche Feinanteile zu entfernen. Der verbliebene Rückstand wird kurz mit Leitungswasser gewaschen und die Ultraschallbehandlung ggf. wiederholt, bis während der Ultraschallbehandlung keine Feinstoffe mehr in das Wasser übertreten. Das Sieb wird dann bis zur Gewichtskonstanz getrocknet. Zum Auswiegen wird der auf dem Sieb verbliebene Rückstand in eine gewogene Porzellanschale überführt.

### Bestimmung des Schüttgewichts

Ein bei der 1000 ml Markierung abgeschnittener Messzylinder wird gewogen. Dann wird die zu untersuchende Probe mittels eines Pulvertrichters so n einem Zug in den Messzylinder eingefüllt, dass sich oberhalb des Abschlusses des Messzylinders ein Schüttkegel ausbildet. Der Schüttkegel wird mit Hilfe eines Lineals, das über die Öffnung des Messzylinders geführt wird, abgestreift und der gefüllte Messzylinder erneut gewogen. Die Differenz entspricht dem Schüttgewicht.

### Röntgendiffraktometrie

1 bis 2 g der Probe werden in einem Achatmörser von Hand gemahlen und dann durch ein Sieb mit einer Maschenweite von 20 µm gesiebt. Ggf. wurde der Mahlvorgang solange wiederholt, bis die gesamte Probe das Sieb passiert. Für die Messungen wurde ein Siemens D5000 Röntgendiffraktometer verwendet. Es wurden die folgenden Messbedingungen verwendet:

| Probenhalter | Kunststoff, "top loading", Ø = 25 mm |
|---|---|
| Dicke der Pulverschicht | 1 mm |
| Röntgenquelle | Cu Kα: 40 kV/40mA |
| Diffraktionswinkel | 2 - 80 ° (2 θ) |
| Messzeit | 3 Sekunden pro Schritt |
| Spalt | Primäre und sekundäre Divergenzblenden mit Schlitzweiten von 1 mm |

Die qualitative Auswertung der Diffraktogramme, d.h. die Zuordnung der mineralischen Phasen erfolgte mit Hilfe des kommerziell erhältlichen Programms "EVA" der Bruker AXS GmbH, Karlsruhe entsprechend der Veröffentlichung von Brindley und Brown (1980): "Crystal Structures of clay minerals and their X-ray identification"; Mineralogical Society No. 5, 495.

Die quantitative Auswertung erfolgte nach dem Rietveld-Verfahren unter Verwendung des Computerprogramms AutoQuan der Seifert GE Inspection Technologies GmbH, Ahrensburg, DE. Zur Bestimmung des Anteils der amorphen Phase wurde Zinkit als interner Standard verwendet. Für die Hintergrundkorrektur wurde ein Polynom vierten Grades in einem Winkelbereich von 4 bis 80 ° (2θ) verwendet.

### Röntgendiffraktometrie zur Bestimmung des Nebenmineralgehaltes der Vergleichsprobe (Calciumbentonit)

Die Röntgenaufnahmen für dieses Muster wurden an einem hochauflösenden Pulverdiffraktometer der Fa. Phillips (X'-Pert-MPD(PW 3040)) erstellt, das mit einer Cu-Anode ausgerüstet war. Der Nebenmineralgehalt des Schichtsilicats (z.B. Bentonit) wurde durch Vergleich mit Messungen aus einer Konzentrationsreihe mit nebenmineralfreiem Schichtsilicat, der mit dem entsprechenden Nebenmineral angereichert wurde, bestimmt. Hierzu wurden für die Minerale sog. NIST-Standards NIST (bezogen von National Institute of Standards and Technology, 100 Bureau Drive, Stop 2300, Gaithersburg, MD 20899-2300) eingesetzt. Für jedes Mineral wurde die Reflexintensität (-höhe) des intensivsten Reflexes als Funktion des Gehalts des jeweiligen Nebenminerals im ReferenzMaterial bestimmt. Aus diesen Daten kann nach Bestimmung der Höhe desselben Reflexes in der unbekannten Probe der Gehalt des entsprechenden Nebenminerals berechnet werden. Dieses Verfahren ist als halbquantitativ zu bewerten.

### Bestimmung der Sterylglycoside mit HPLC:

Für die Bestimmung der Sterylglycoside wurde eine von der Fa. ASG Analytik-Service Gesellschaft mbH, Trentiner Ring 30, 86356 Neusäß entwickelte GC-MS-Methode eingesetzt. Dabei wurde wie folgt vorgegangen:

### 1. Anreicherung der Sterylglucoside

Zur Anreicherung der Sterylglycoside wurde entsprechend dem IP 387/97 Filter Blocking Tendency (FBT-Test) eine definierte Menge des zu untersuchenden rohen Biodiesels durch ein 1,6 µm Glasfiberfilter filtriert. Für einen vollständigen Test werden ca. 300 mL Biodiesel benötigt.

Der Filter wurde anschließend zunächst mit 4 mL Hexan extrahiert und dann die Sterylglycoside mit 1 ml Pyridin aus dem Filter gewaschen. Zur Probe werden 100 µL MSTFA (N-Methyl-N-(trimethylsilyl)trifluoroacetamid) als Silylierungsreagenz und 50 µL Tricaprinlösung (71.3 mg Tricaprin auf 10 mL Pyridin) gegeben. Die Mischung wurde 20 min bei 60 °C stehen gelassen und dann 7 mL Hexan zugegeben. Die Mischung wird über einen 0,45 µm Spritzenfilter filtriert. Für die Messungen wurden jeweils 1 µL der Lösung ins GC/MS-System injiziert.

### 2. Kalibrationsstandards

Die Quantifizierung der Sterylglucoside erfolgte durch Vergleich mit einer Kalibrationskurve.

Dazu wurde eine Stammlösung einer reinen Sterylglucosidmischung in Pyridin hergestellt, deren Konzentration im Bereich von ca. 50 mg/10 mL eingestellt war. Es wurden definierte Volumina der Stammlösung abgemessen und mit 100 µL MSTFA sowie 50 µL Tricaprinlösung versetzt. Die Mischung wurde 20 Minuten bei 60 °C stehen gelassen und nach Zugabe von 8 mL Hexan durch ein 0,45 µm Spritzenfilter filtriert. Für die Messungen wurden jeweils 1 µL der Lösung ins GC/MS-System injiziert. Aus den Intensitäten der MS-Signale wurde in Abhängigkeit von der eingespritzten Probenmenge eine Kalibrationskurve erstellt.

### 3. Messung am GC/MS

### 3.1 Bedingungen GC

| | |
|---|---|
| Vorsäule: | Zebron Guard Column; 10 m; 0,32 mm ID |
| Säule: | Zebron-5HT Inferno; 15 m; 0,32 mm ID; 0,25 µm |
| Injektion: | on column |
| Trägergas: | Helium |
| Fluss: | 1,5 mL/min |
| Ofen: | 60 °C für 1 min, mit 15 °C/min auf 375 °C, für 3 min Temperatur halten |

### 3.2 Bedingungen MS

| | |
|---|---|
| Segment 1 : | 0-2 Min Hexan, Cut off |
| Segment 2 : | 2 - 25 Min EI (auto), 40 - 650 m/z |
| Scan Time : | 0.50 scans/sec |
| Multiplier Offset : | 0 V |
| Emission Current : | 40 pA |
| Count Threshold : | 1 counts |
| Target TIC : | 10000 counts |
| Prescan Ionization Time : | 100 µsec |
| Max. Ionization Time : | 5000 µsec |
| Background Mass : | 50 m/z |
| RF Dump value : | 650 m/z |

### 4. Auswertung

Die in den Proben enthaltene Menge an Sterylglucosiden wurde durch Vergleich der Intensität der MS-Signale mit der Kalibrationskurve ermittelt.

### Reinigung von Biodiesel

### Ausgangsmaterial

### Verwendete Adsorbentien:

Für die Versuche wurden die in Tabelle 3 aufgeführten Adsorbentien verwendet. Neben den erfindungsgemäß eingesetzten Adsorbentien 1 bis 3 wurde als Vergleich noch ein kommerziell erhältlicher Calciumbentonit (Calcigel^{®}, Süd-Chemie AG, München, DE), sowie ein kommerziell erhältliches synthetisches Magnesiumsilikat (Magnesol^{®}, The Dallas Corp., Dallas, US) eingesetzt.

Die physikalischen Daten für die erfindungsgemäß eingesetzten Adsorbentien 1 bis 3, sowie für den kommerziell eingesetzten Calciumbentonit sind in Tabelle 3 zusammengefasst.

**Tabelle 3: physikalische Eigenschaften von Adsorbentien**

| Adsorbens | 1 | 2 | 3 | Ca-Bentonit |
|---|---|---|---|---|
| Trockensiebrückstand auf 45 µm (%) | 49 | 55 | 5.2 | n.d. |
| Trockensiebrückstand auf 63 µm (%) | 35 | 40 | 38 | max. 20 |
| Schüttgewicht (g/l) | 292 | 468 | -- | 750 |
| Methylenblauadsorption (mg/g Probe) | 106 | 152 | 179 | 247 |
| Wassergehalt (%) | 8 | 13 | 12 | 9 ± 4 |
| pH (10 Gew.-% in Wasser) | 7.6 | 9 | 8.1 | |
| Kationenaustauschkapazität (meq/100 g) | 52 | 44 | 53.3 | 59 |
| BET Oberfläche (m²/g) | 208.4 | 238 | 248 | 65 |
| Kumulatives Porenvolumen (BJH) für Porendurchmesser 1.7 - 300 nm (cm³/g) | 0.825 | 0.623 | 0.777 | 0,103 |
| Durchschnittlicher Porendurchmesser (BJH) (nm) | 16.4 | 10.0 | 55 | 9,6 |
| Sediment- bzw. Quellvolumen (ml/2g) | 5.5 | 3 | 4 | 6 |

Die Zusammensetzung der erfindungsgemäß verwendeten Adsorbentien 1 bis 3 sowie des als Vergleich eingesetzten Calciumbenonits ist in Tabelle 4 angegeben.

**Tabelle 4: Zusammensetzung der Adsorbentien**

| Adsorbens | 1 | 2 | 3 | Calciumbentonit |
|---|---|---|---|---|
| SiO₂ | 70.6 | 69.4 | 69.4 | 57,9 |
| Fe₂O₃ | 2.8 | 3.4 | 3.4 | 4,9 |
| Al₂O₃ | 9.8 | 9.9 | 9.9 | 18,3 |
| MgO | 4.1 | 3.1 | 3.1 | 3,4 |
| CaO | 1.4 | 2.5 | 2.5 | 3,1 |
| K₂O | 1.5 | 1.3 | 1.3 | 1,8 |
| Na₂O | 0.26 | 0.94 | 0.94 | 0,7 |
| TiO₂ | 0.25 | 0.38 | 0.38 | -- |
| SO₃ | -- | -- | -- | -- |
| GV (1000 °C) | 7.9 | 8.1 | 8.1 | 8,9 |

Weiter wurden die erfindungsgemäß verwendeten Adsorbentien 1 und 2 durch Röntgendiffraktometrie in ihrer mineralischen Zusammensetzung genauer untersucht. Die Auswertung erfolgte wie oben beschrieben. Die mineralische Zusammensetzung der Adsorbentien 1 und 2 sowie des als Vergleich herangezogenen Calciumbentonits ist in Tabelle 5a und 5b zusammengefasst.

**Tabelle 5a: mineralische Zusammensetzung von Adsorbentien, ermittelt durch Auswertung von Röntgendiffraktogrammen unter Verwendung der Rietveld-Analyse**

| Mineralische Phase | Adsorbens 1 | Adsorbens 2 |
|---|---|---|
| Smektit (Gew.-%) | 40 | 40 |
| Illit / Muscovit (Gew.-%) | Spuren | n.b. |
| Kaolinit (Gew.-%) | n.b. | 1 |
| Sepiolith (Gew.-%) | 11 | n.b. |
| Quarz (Gew.-%) | Spuren | 1 |
| Orthoclas (Gew.-%) | 12 | 8 |
| Plagioclas (verschieden) (Gew.-%) | 3 | 11 |
| Calcit (Gew.-%) | Spuren | 1 |
| Amorphes Material (Gew.-%) | 34 | 38 |

In der folgenden Tabelle 5b sind die Nebenmineralgehalte des als Vergleichmaterials Calciumbentonit, bestimmt aus Röntgenmessungen aufgeführt(siehe Methodenbeschreibung):

**Tabelle 5b: mineralische Zusammensetzung des als Vergleich verwendeten Calciumbentonits (Calcigel^{®})**

| Mineralische Phase | Calciumbentonit |
|---|---|
| Kaolinit (Gew.-%) | 1 - 2 |
| Quarz (Gew.-%) | 6 - 9 |
| Feldspat (Gew.-%) | 1 - 4 |
| Glimmer (Gew.-%) | 1 - 6 |
| Andere Minerale (Gew.-%) | 5 - 10 |

Die Adsorbentien 1 und 2 enthalten als wesentliche Bestandteile Smektit sowie eine amorphe Phase. Daneben enthalten die als Adsorbentien verwendeten Tonminerale noch Anteile von Nebenmineralien. So enthält das Adsorbens 1 noch Anteile von Sepiolith und Orthoclas, sowie geringere Anteile an Plagioclas. Adsorbens 2 enthält als wesentliche Nebenminerale Plagioclas und Sepiolith sowie kleinere Mengen an Kaolinit, Quarz und Calcit. Beide Adsorbentien enthalten mehr als 30 % amorphe Phase. Adsorbens 2 enthält die amorphe Phase in nahezu der gleichen Menge wie den smektitische Ton (Verhältnis 100:95). Für das Adsorbens 1 beträgt das Verhältnis von smektitischem Ton zu amorphem Material 100:85. Die im erfindungsgemäßen Verfahren eingesetzten Tonmineralien weisen daher eine völlig andere Struktur auf als smektitische Tone, wie sie bisher beispielsweise zum Bleichen von Ölen eingesetzt werden. Der hohe Anteil an amorphem Material wird durch amorphes, natürliches Kieselgel gebildet. Dies ergibt sich durch Zusammenschau mit der Silicatanalyse, welche für die beiden Adsorbentien 1 und 2 einen hohen SiO₂-Gehal zeigt. Üblicherweise findet man hohe SiO₂-Gehalte in Bentonit- bzw. Smektitproben nur dann, wenn diese Mineralien große Mengen an Nebenmineralen, wie Quarz, Cristobalit oder Trydimit, enthalten.

### Herstellung von Granulaten

Rohtone, die den Adsorbentien 1 und 2 entsprechen, wurden bei einem Wassergehalt von 50 bis 60 Gew.-% an Luft bis auf einen Wassergehalt von 6 bis 8 Gew.-% getrocknet. Die getrockneten Rohtone wurden in einem Backenbrecher zerkleinert und anschließend Granulate mit einem Größenbereich von 0,2 bis 1,2 bzw. 0,2 bis 1,0 mm durch Sieben abgetrennt. Die Eigenschaften der so erhaltenen Granulate sind in Tabelle 6 zusammengefasst.

**Tabelle 6: Eigenschaften granulatförmiger Adsorbentien**

| | Adsorbens 1 in Granulatform | Adsorbens 2 in Granulatform |
|---|---|---|
| Wassergehalt (%) | 8,5 | 6 |
| pH-Wert (2 Gew. % in Wasser) | 8 | 8 |
| Schüttgewicht (g/l) | 340 | 630 |
| Partikelgrößenverteilung | 5% max.>1,2mm | 5 % max. > 1 mm |
| | 5% max.<0,2mm | 5% max. < 0,2mm |

Die Adsorbentien wurden vor der Durchführung der Beispiele jeweils in einem Trockenschrank auf einen Wassergehalt < 8 Gew.-% getrocknet.

### rohes Biodiesel

### Biodiesel aus Palmöl

Für die im folgenden beschriebenen Untersuchungen wurde ein Biodiesel (Methylester) eingesetzt, der aus Palmöl hergestellt worden war. In der Ausgangsprobe konnte mittels GC/MS ein Sterylglycosid-Gehalt von 11 ppm festgestellt werden. Bei Raumtemperatur sind die Sterylglycoside in Form von Trübungen sichtbar, die durch kleine Kristalle und Flocken verursacht werden. Diese Trübungen verschwinden, wenn die Probe auf 80 °C aufgeheizt wird. Nach Abkühlen fallen die Trübungen wieder aus, d.h. der Prozess ist reversibel. Das gilt erfahrungsgemäß nur, wenn der Wassergehalt des Biodiesels gering ist. Dieses rohe Biodiesel wurde ohne weitere Vorbehandlung in den folgenden Beispielen eingesetzt.

### Biodiesel aus Sojaöl

Für weitere Beispiele wurde ein aus Sojaöl hergestellter Biodiesel (Methylester) verwendet. Das rohe Biodiesel wies einen Gehalt an Sterylglycosiden von 28 ppm auf.

### Durchführung der Reinigung

Zu jeweils etwa 500 bis 800 g des rohen Biodiesels wurde unter Rühren jeweils 1 Gew.-% Adsorbens zugegeben. Die Probe wurde für 20 Minuten bei Raumtemperatur gerührt und dann das Adsorbens durch Filtration durch ein Papierfilter abgetrennt. Das Filtrat wurde direkt für die Quantifizierung der Sterylglycoside verwendet.

### Beispiel 1: Reinigung von aus Palmöl hergestelltem Biodiesel durch Suspendieren eines Adsorbens im Biodiesel

Das aus Palmöl hergestellte rohe Biodiesel wurde in der oben angegebenen Weise mit den in Tabelle 3 charakterisierten Adsorbentien gereinigt. Die für die Proben ermittelten Mengen an Sterylglycosiden sind in Tabelle 7 zusammengefasst.

**Tabelle 7: Sterylglycosidgehalte in aus Palmölen hergestellten Biodieselproben, welche mit verschiedenen Adsorbentien gereinigt wurden**

| Adsorbens | Sterylglycosidgehalt (mg/Kg) |
|---|---|
| rohes Biodiesel | 10 |
| Adsorbens 1 | n.b. |
| Calciumbentonit | 8 |
| Magnesol | n.b. |

| | |
|---|---|
| n.b.: nicht bestimmbar; unter der Nachweisgrenze der Methode | |

Mit dem erfindungsgemäß verwendeten Adsorbens 1 wird eine vergleichbare Reinigungsleistung erreicht, wie mit dem kommerziell angebotenen synthetischen Magnesiumsilikat Magnesol^{®}. Die Reinigungsleistung des Adsorbens 1 ist im Vergleich zu Calciumbentonit jedoch besser. Dies zeigt, dass das erfindungsgemäß verwendete Adsorbens 1 durch seine hohe Porosität ein verbessertes Adsorptionsvermögen gegenüber einem üblichen Bentonit aufweist, obwohl vermutet werden kann, dass auch beim Adsorbens 1 die Oberflächen der Bentonitstrukturen für die Adsorption der Sterylglycoside verantwortlich sind.

### Beispiel 2: Reinigung von aus Sojaöl hergestelltem Biodiesel

Analog Beispiel 1 wurde das jeweilige Adsorbens im rohen Biodiesel suspendiert. Als Adsorbentien wurden die in Tabelle 3 charakterisierten Adsorbentien 1 und 2 sowie die granulatförmigen Adsorbentien 1 und 2 aus Tabelle 6 verwendet. Die nach der Reinigung ermittelten Gehalte an Sterylglycosiden sind in Tabelle 8 zusammengefasst.

**Tabelle 8: Sterylglycosidgehalte in Biodiesel (Sojaöl) nach Reinigung mit verschiedenen Adsorbentien**

| | Sterylglycosidgehalt (ppm) |
|---|---|
| rohes Biodiesel, Messung 1 | 48 |
| rohes Biodiesel Messung 2 | 51 |
| Calciumbentonit (Calcigel®) | 42 |
| Magnesiumsilikat (Magnesol®) | < 10 |
| Adsorbens 1; Pulver | < 10 |
| Adsorbens 2; Pulver | < 10 |
| Adsorbens 1; Granulat | < 10 |
| Adsorbens 2; Granulat | < 10 |

Sowohl mit pulverförmigem als auch mit granulatförmigem Adsorbens 1 bzw. 2 kann mit dem erfindungsgemäßen Verfahren der Sterylglycosidgehalt auf weniger als 10 ppm erniedrigt werden.

Wie die Daten zeigen, ist es möglich, mit 1 % der erfindungsgemäß verwendeten Adsorbentien den Sterylglycosid-Gehalt des Biodiesels von 50 ppm (Mittelwert der Messungen am unbehandelten Biodiesel) bis unter 10 ppm (Nachweisgrenze der Methode) zu verringern. Die erfindungsgemäßen Materialien sind dem auf dem Markt bereits zur Reinigung von Biodiesel angebotenen Material Magnesol^{®} zumindest gleichwertig. Überraschend ist, dass Bruchgranulate ähnlich wirksam wie Pulver sind. Dagegen sind übliche Bentonite, wie der als Vergleich verwendete Calciumbentonit wenig wirksam, obwohl Bentonit-Oberflächen nach der Literatur eine hohe Affinität zu Verbindungen mit Hydroxylgruppen, insbesondere Alkoholen aufweisen. So wird das Aufquellen von Bentoniten mit Glycerin benutzt, um deren Vorliegen durch Röntgenmessungen nachzuweisen. In diesem Falle quellen die Schichten durch Interkalation des Glycerins auf. Die bessere Wirksamkeit der erfindungsgemäßen Materialien gegenüber den Standard-Bentoniten lässt sich durch deren weit höhere Porosität und deren bessere Zugänglichkeit der Schichtsilicatoberflächen für eine Adsorption erklären.

Beispiel 3: Reinigung eines aus Palmöl hergestellten Biodiesels durch ein in einer Säule gepacktes granulatförmiges Adsorbens

### a) luftgetrocknetes Granulat

50 g des in Tabelle 6 beschriebenen Adsorbens 1 in Granulatform wurde in eine mit einer Glasfritte und einem Teflonhahn versehene Glassäule eingefüllt, die einen Innendurchmesser von 3 cm aufwies. Auf die Säule wurden portionsweise 5 l eines aus Palmöl hergestellten rohen Biodiesels (Methylester) gegeben, welches einen Sterylglycosidgehalt von 50 ppm aufwies. Das rohe Biodiesel wurde in einem Wasserbad auf ca. 60 °C temperiert und portionsweise so in den Raum oberhalb der Säulenpackung gegeben, dass die abfließende Menge des Biodiesels ergänzt wurde und ein näherungsweise gleichmäßiger Strom durch die Säulenpackung erreicht wurde. Die Durchflussrate der Säule wurde mittels des Teflonhahns auf ca. 50 ml/min eingestellt. Das gereinigte Biodiesel wurde in einem Glasbecher aufgefangen, welcher mit einer Graduierung versehen war. Nachdem etwa 2 l rohen Biodiesels auf die Säule gegeben worden waren, wurden 50 ml des gereinigten Biodiesels aufgefangen und der Gehalt an Sterylglycosiden in der Probe wie oben beschrieben mit HPLC bestimmt. Dabei wurde ein restlicher Sterylglycosidgehalt von 8 ppm bestimmt.

Nach Passieren von ca. 4,8 l rohen Biodiesels wurde erneut eine Probe von 50 ml aufgefangen und auf ihren Gehalt an Sterylglycosiden untersucht. Der Gehalt an Sterylglycosiden wurde zu etwa 50 ppm bestimmt. Die Kapazität der Säule wurde damit als erschöpft angesehen.

### b) Hitzebehandeltes Granulat

Ca 300 g des in Tabelle 6 beschriebenen Granulats 1 wurden in einem Ofen für eine Stunde auf 600 °C erhitzt. Nach Abkühlen an Luft wurde ein hitzebehandeltes Granulat erhalten, welches beim Zerdrücken eine gegenüber dem luftbehandelten Granulat deutlich erhöhte Festigkeit aufwies. Analog wie beim luftgetrockneten Granulat beschrieben, wurde eine Säulenpackung hergestellt und rohes Biodiesel über die Säule geleitet.

Nachdem etwa 2 l Biodiesel auf die Säule gegeben worden waren, wurde eine Probe genommen. Der Gehalt an Sterylglycosiden in der Probe wurde zu 18 ppm bestimmt. Durch die Hochtemperaturbehandlung wird die Aktivität des Adsorbens also geringfügig abgeschwächt.

### c) Regeneration der Säule

Auf die wie bei (a) beschrieben erhaltene erschöpfte Säule wurde ein Gemisch aus Chloroform und Methanol (2 : 1 v/v) gegeben und 800 ml eluiert. Anschließend wurde die Säule erneut wie bei (a) beschrieben mit 3 l rohem Biodiesel belegt. Nachdem die Säule mit 2,5 l rohem Biodiesel belegt worden war, wurde eine Probe von 50 ml aufgefangen. Die HPLC-Analyse ergab einen Gehalt an Sterylglycosiden von 11 ppm.

## Patentansprüche

1. Verfahren zur Reinigung von Biodiesel, wobei
- ein rohes Biodiesel bereitgestellt wird, welches mindestens ein Glycosid in einer Menge von weniger als 500 ppmw enthält;
- das rohe Biodiesel mit einem Adsorbens umgesetzt wird, welches zumindest eine Smektit-Kieselgel-Mischphase enthalt, wobei die Smektit-Kieselgel-Mischphase zumindest die folgenden physikalischen Parameter aufweist:
- eine spezifische Oberfläche von mehr als 120 m²/g
- ein Gesamtporenvolumen von mehr als 0,35 ml/g;
- einen Siliziumgehalt, berechnet als SiO₂, von zumindest 60 Gew.-%; und
- ein gereinigtes Biodiesel von dem Adsorbens abgetrennt wird.

2. Verfahren nach Anspruch 1, wobei das rohe Biodiesel einen Glycosidgehalt von mehr als 10 ppm aufweist.

3. Verfahren nach einem der Ansprüche 1 oder 2, wobei das Glycosid ein Sterylglycosid ist.

4. Verfahren nach einem der vorhergehenden Ansprüche, wobei das Adsorbens in Form eines Granulats bereitgestellt wird.

5. Verfahren nach Anspruch 4, wobei das Granulat eine Korngröße von mehr als 0,5 mm aufweist.

6. Verfahren nach einem der Ansprüche 4 oder 5, wobei das Granulat erhalten wird, indem das Adsorbens luftgetrocknet, gebrochen und gesiebt wird.

7. Verfahren nach einem der vorhergehenden Ansprüche, wobei das Adsorbens in Form einer Säulenpackung bereitgestellt wird.

8. Verfahren nach einem der vorhergehenden Ansprüche, wobei die Smektit-Kieselgel-Mischphase einen Aluminiumgehalt, berechnet als Al₂O₃, von weniger als 15 Gew.-% aufweist.

9. Verfahren nach einem der vorhergehenden Ansprüche, wobei die Smektit-Kieselgel-Mischphase einen Anteil einer amorphen Phase, ermittelt durch quantitative Röntgendiffraktionsanalyse, von zumindest 10 % aufweist.

10. Verfahren nach einem der vorhergehenden Ansprüche, wobei die Smektit-Kieselgel-Mischphase eine Kationenaustauscherkapazität von mehr als 40 meq/100 g aufweist.

11. Verfahren nach einem der vorhergehenden Ansprüche, wobei nach dem Abtrennen des gereinigten Biodiesels von dem Adsorbens das Glycosid von dem Adsorbens abgetrennt wird.

## Claims

1. Method for purifying biodiesel, wherein
- a crude biodiesel is provided which contains at least one glycoside in a quantity of less than 500 ppmw;
- the crude biodiesel is reacted with an adsorbent which contains at least one smectite-silica gel mixed phase, wherein the smectite-silica gel mixed phase has at least the following physical parameters:
- a specific surface area of more than 120 m²/g
- a total pore volume of more than 0.35 ml/g;
- a silicon content, calculated as SiO₂, of at least 60 wt-%; and
- a purified biodiesel is separated off from the adsorbent.

2. Method according to claim 1, wherein the crude biodiesel has a glycoside content of more than 10 ppm.

3. Method according to one of claims 1 or 2, wherein the glycoside is a sterylglycoside.

4. Method according to one of the previous claims, wherein the adsorbent is provided in the form of a granular material.

5. Method according to claim 4, wherein the granular material has a particle size of more than 0.5 mm.

6. Method according to one of claims 4 or 5, wherein the granular material is obtained by air-drying, breaking and sieving the adsorbent.

7. Method according to one of the previous claims, wherein the adsorbent is provided in the form of a column packing.

8. Method according to one of the previous claims, wherein the smectite-silica gel mixed phase has an aluminium content, calculated as Al₂O₃, of less than 15 wt.-%.

9. Method according to one of the previous claims, wherein the smectite-silica gel mixed phase has an amorphous-phase content, ascertained by quantitative X-ray diffraction analysis, of at least 10%.

10. Method according to one of the previous claims, wherein the smectite-silica gel mixed phase has a cation exchange capacity of more than 40 meq/100 g.

11. Method according to one of the previous claims, wherein the glycoside is separated from the adsorbent after the separation of the purified biodiesel from the adsorbent.

## Revendications

1. Procédé de purification de biodiesel, consistant à
- mettre à disposition un biodiesel brut contenant au moins un glycoside dans une quantité inférieure à 500 ppm(w) ;
- faire réagir ledit biodiesel avec un adsorbant contenant au moins une phase mixte de smectite/gel de silice, la phase mixte de smectite/gel de silice présentant au moins les paramètres physiques suivants :
- une surface spécifique supérieure à 120 m²/g
- un volume poreux total supérieur à 0,35 ml/g ;
- une teneur en silicium, calculée sous forme SiO₂, d'au moins 60 % en poids ; et
- séparer un biodiesel purifié dudit adsorbant.

2. Procédé selon la revendication 1, le biodiesel brut présentant une teneur en glycoside supérieure à 10 ppm.

3. Procédé selon l'une des revendications 1 ou 2, ledit glycoside étant un glycoside stérylique.

4. Procédé selon l'une des revendications précédentes, ledit adsorbant étant mis à disposition sous forme de granulés.

5. Procédé selon la revendication 4, les granulés ayant une granulométrie supérieure à 0,5 mm.

6. Procédé selon l'une des revendications 4 à 5, les granules étant obtenus en soumettant l'adsorbant à un séchage à l'air, un concassage et un tamisage.

7. Procédé selon l'une des revendications précédentes, ledit adsorbant étant mis à disposition sous forme d'un produit destiné à remplir une colonne.

8. Procédé selon l'une des revendications précédentes, la phase mixte de amectite/gel de silice présentant une teneur en aluminium, calculée sous forme de Al₂O₃, inférieure à 15 % en poids.

9. Procédé selon l'une des revendications précédentes, la phase mixte de smectite/gel de silice présentant une proportion d'une phase amorphe d'au moins 10 %, déterminée par diffractométrie de rayons X quantitative.

10. Procédé selon l'une des revendications précédentes, la phase mixte de smectite/gel de silice présentant une capacité d'échange de cations supérieure à 40 meq/100 g.

11. Procédé selon l'une des revendications précédentes, le glycoside étant séparé de l'adsorbant après que le biodiesel purifié a été séparé dudit adsorbant.
